(19) Europäisches Patentamt
European Patent Office
Office européen des brevets

(11) **EP 2 693 818 A1**

(12) **EUROPEAN PATENT APPLICATION**
published in accordance with Art. 153(4) EPC

(43) Date of publication:
05.02.2014 Bulletin 2014/06

(51) Int Cl.:
*H04W 72/04* (2009.01)

(21) Application number: 12763451.7

(22) Date of filing: 23.03.2012

(86) International application number:
**PCT/CN2012/072904**

(87) International publication number:
**WO 2012/130097 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 31.03.2011 CN 201110081288
19.05.2011 CN 201110130194
06.07.2011 CN 201110188594
08.02.2012 CN 201210027898
21.02.2012 CN 201210041628

(71) Applicant: **Beijing Nufront Mobile Multimedia Tech. Co., Ltd.**
**Beijing 100084 (CN)**

(72) Inventors:
• **BAO, Dongshan**
**Beijing 100084 (CN)**

• **ZHOU, Yubao**
**Beijing 100084 (CN)**
• **YU, Xiaoyan**
**Beijing 100084 (CN)**
• **YAO, Huijuan**
**Beijing 100084 (CN)**
• **YAN, Zhigang**
**Beijing 100084 (CN)**
• **LIU, Shenfa**
**Beijing 100084 (CN)**

(74) Representative: **Hansson, Anders Max**
**Awapatent AB**
**P.O. Box 45086**
**104 30 Stockholm (SE)**

(54) **RESOURCE REQUEST METHOD, STATION, AND CENTRAL ACCESS POINT**

(57) The present invention provides a resource request method, a station, and a central access point. The method comprises: bearing a transmission resource request in a data frame; and sending the data frame carrying the transmission resource request. The method provides a solution for acquiring resources required by uplink transmission data.

Figure7

**Description**

**CROSS-REFERENCE TO RELATED APPLICATION**

1) This application claims the priority of a Chinese patent application No. 201110081288.6 filed on March 31, 2011 and titled "COMMUNICATION METHOD", which is incorporated herein by reference in its entirety.

2) This application claims the priority of a Chinese patent application No. 201110130194.3 filed on May 19, 2011 and titled "COMMUNICATION SYSTEM", which is incorporated herein by reference in its entirety.

3) This application claims the priority of a Chinese patent application No. 201110188594.X filed on July 6,2011 and titled "METHOD, DEVICE AND SYSTEM USED FOR RESOURCE REQUEST", which is incorporated herein by reference in its entirety.

4) This application claims the priority of a Chinese patent application No. 201210027898.2 filed on February 8, 2012 and titled "METHOD AND DEVICE USED FOR RESOURCE REQUEST", which is incorporated herein by reference in its entirety.

5) This application claims the priority of a Chinese patent application No. 201210041628.7 filed on February 21, 2012 and titled "A Method used for Resource Request, Station and Central Access Point", which is incorporated herein by reference in its entirety.

**FIELD OF THE INVENTION**

This invention belongs to the technical field of wireless communication, especially related to a method used for resource request and apparatus.

**BACKGROUND OF THE INVENTION**

Over the recent years, wireless network technology include the wireless LAN technique WiFi that is based on the 802.11 standard, the Bluetooth system that is based on the 802.15 standard, the Femto technique that is directed to indoor applications and derived from the mobile communication system, etc.

The 802.11-based WiFi technique is currently the most widely used wireless network transmission technology. It is principally applied to wireless local area network environment, application scenarios with room predominate, may also be applied to an outdoor environment. 802.11 system evolves into 802.11a and 802.11g based on OFDM technology form initial 802.11b CDMA-based transmission mechanism. Although, in the latest IEEE 802.11n-2009 standard, enabling 802.11n physical peak rate attainable 600Mbps by introducing multi-antenna (MIMO) technology, but typically MAC (Media Access Control) layer throughput only reaches to the maximum of 300Mbps. So for conventional WLAN systems, MAC layer design of a single-user access network based on CSMA/CA(Carrier Sense Multiple Access with Collision Avoidance) is bottleneck of network performance. Thus, although existing Wi-Fi techniques provide user with cheap access way to some degree, but is hard to accommodate current and future rapid development of high rate multimedia service demands.

Femto technique based on 3GPP standard is a kind of new technology for indoor coverage evolved from mobile communication system, Femto technique basedon 3G system employs CDMA transmission scheme, LTE or WiMAX system-oriented Femto techniques employ OFDM transmission scheme. This multiple access mechanism by time, frequency, codeword allocated for different users mutually orthogonal access resource contention, it is substantially different from competition-based CSMA/CA access. However Femto techniques derive from mobile communication system oriented 3G/LTE/WiMAX system. Since 3G/LTE/WiMAX system primarily apply to wide area coverage mobile communication scenario, system characteristics for short-range wireless communication scenario is not optimized. Meanwhile, strict requirement of synchronization in complicated upper layer protocol design and PHY layer based 3G/LTE/WiMAX, Results in equipment cost cannot be cheap as 802.11, that is also main reason why Femto technique have not been widely used at present.

With increasingly rapid development of multimedia service application requirements, in order to meet demand for wireless communication, there is a need to present a more suitable implementation.

**SUMMARY OF THE INVENTION**

The technical problem to be solved in this invention is to provide a method for resource request, station and central access point (CAP) and thus ask for the resource required by uplink data transmission.

In order to solve the technical problems, the present invention provide a resource request method , is characterized in that , comprising:

Carrying transmission resource request in data frame;
Sending the data frame carrying the transmission resource request.
In order to solve the technical problems, the present inventionprovide a method for resource request, is characterized in that comprising
Receive data frame which carries transmission resource request;
Parse said transmission resource request from said data frame;
Allocate transmission resource for corresponding STA in accordance with said transmission resource request;
Send the transmission resource response to the said corresponding STA, said transmission resource request carries the transmission resource indication.

In order to solve the technical problems, the present invention further provide a station STA used for resource request , is characterized in that , comprising:

Encapsulation module, used for carrying transmission resource request in data frame;
First sending module, used for sending data frame carried in transmission resource request.

In order to solve the technical problems, the present invention further provide a central access point CAP used for resource request, is characterized in that, comprising:

Receiving module, used for receiving data frame which carries transmission resource request;
Analysis module, used for parsing said transmission resource request from said data frame;
Resource allocation module, used for allocating transmission resource for corresponding STA in accordance with said transmission resource request;
Sending module, used for sending transmission resource response to said corresponding STA, said transmission resource response carries the transmission resource instruction.
The method, station, and CAP for resource request aims to obtain the resource required by uplink data transmission.

## BRIEF DESCRIPTION OF THE DRAWING

Figure 1 is a flow chart of a method for resource request provided by the first embodiment example of this invention;
Figure 2 is a flow diagram of a method for generating scheduling request sequence provided by the embodiment of this invention;
Figure 3 is a principle diagram of PN sequence generator provided by the embodiment of this invention;
Figure 4 is a schematic diagram of frame structure for independent resource request provided by the embodiment of this invention;
Figure 5 is a structural representation of STA used for resource request in a competitive way according to a first embodiment of the invention;
Figure 6 is a structural representation of CAP used for resource request in a competitive way according to a first embodiment of the invention;
Figure 7 is a schematic flow chart of a method for resource request in a associated way according to a second embodiment of the invention;
Figure 8 is a structural representation of STA used for resource request in a associated way according to a second embodiment of the invention;
Figure 9 is a structural representation of CAP used for resource request in a associated way according to a second embodiment of the invention;
Figure 10 is a schematic flow chart of a method for resource request in a polling way according to a third embodiment of the invention;
Figure 11 is a structural representation of CAP used for resource request in a polling way according to a third embodiment of the invention;
Figure 12 is a schematic flow chart of a method for resource request in a polling way according to a fourth embodiment of the invention;
Figure 13 is a structural representation of CAP used for resource request in a polling way according to a fourth embodiment of the invention;
Figure 14 is a schematic flow chart of a method for resource request in a polling way according to a fifth embodiment of the invention;
Figure 15 is a structural representation of CAP used for resource request in a polling way according to a fifth embodiment of the invention;
Figure 16 is a schematic flow chart of a method for resource request in a polling way according to a sixth embodiment of the invention;
Figure 17 is a structural representation of CAP used for resource request in a polling way according to a sixth embodiment of the invention.

## DETAILED DESCRIPTION OF THE INVENTION

The description below and accompanying drawings fully illustrate specific embodiments of the invention, to enable one skilled in the art to implement the embodiments. Modifications, such as structural, logical, electrical and process modifications, can be made in other embodiments. The embodiments only represent some possible variations. Individual components or functions are optional and the operation order is variable, unless it is otherwise stated specifically. A part and certain feature of some embodiments may be included in or replaced by a part and certain feature of other embodiment. The scope of the embodiments of the invention includes the whole scope of the claims and all obtainable equivalents thereof. Herein, these embodiments of the invention may be individually or generally represented by the term "invention" for the sake of convenience; moreover, if more than one invention is disclosed actually, it is not intended automatically to limit the application scope to any individual invention or inventive concept.

**First Embodiment Example**

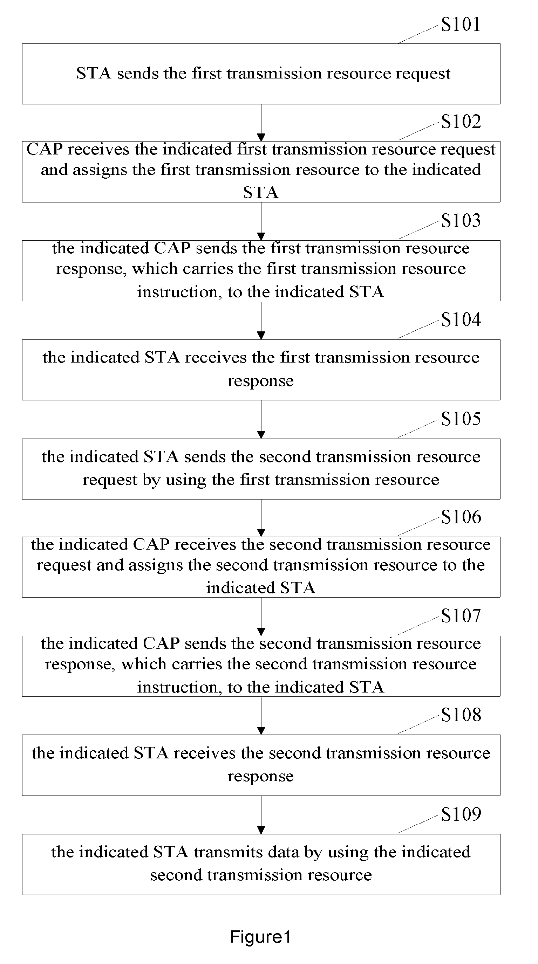

The First Embodiment Example of this Invention provides a resource request method that the station (STA, Station) in need of uplink data transmission sends transmission resource request actively to the central access point (CAP, Central Access Point) to obtain uplink data transmission in a competitive manner. CAP is the entity which provides access service for the accessed stations; while STA containing media access control (MAC) and physical layer (PHY) functional interfaces is the terminal equipment able to communicate with CAP. The resource request method in the First Embodiment Example is shown in Figure 1, including the following steps:

Step S101: STA sends the first transmission resource request;
Step S102: CAP receives the said first transmission resource request and assigns the first transmission resource to the said STA;
Step S103: the said CAP sends the first transmission resource response, which carries the first transmission resource instruction, to the said STA;
Step S104: the said STA receives the first transmission resource response;
Step S105: the said STA sends the second transmission resource request by using the first transmission resource;
Step S106: the said CAP receives the second transmission resource request and assigns the second transmission resource to the said STA;
Step S107: the said CAP sends the second transmission resource response, which carries the second transmission resource instruction, to thesaid STA;
Step S108: the said STA receives the second transmission resource response;
Step S109: the said STA transmits data by using the said second transmission resource.

With the resource request method in the First Embodiment Example of this Invention, STA sends transmission resource request to CAP actively and it is through two interaction, namely, STA sends the first transmission resource request to trigger the resource request process and obtain the first transmission resource, then STA sends the second transmission resource request by using the first transmission resource to obtain the second transmission resource used for the uplink data transmission, that the whole resource request process completes and the resource required by the uplink data transmission is obtained.

Preferably, the said first transmission resource request can be initiated via uplink scheduling. Certainly, in another embodiment, the said first transmission resource request can be initiated via other means, like via the unoccupied uplink transmission resource, or it can be loaded in the uplink data frame and sent with the data frame. There's no hard limit in this Invention. Further information on the initiation of the first transmission resource request via scheduling used in this embodiment will be offered below.

The said first transmission resource request can be a scheduling request sequence specifically. After receiving the scheduling request sequence equal to the first transmission resource request, CAP will include the index of the said scheduling request sequence, the frequency domain cyclic shift parameter index of the said scheduling request sequence, transmission position of the said scheduling request sequence in the uplink scheduling request channel as well as the system frame number sent by the said scheduling request sequence. Based on the index of said scheduling request sequence, the frequency domain cyclic shift parameter index of the said scheduling request sequence, transmission position of the said scheduling request sequence in the uplink scheduling request channel and the system frame number sent by the said scheduling request sequence, STA will determine to receive the first transmission resource response corresponding to the said scheduling request sequence. Certainly, in another embodiment, thesaid first transmission resource request can adopt other approaches and there's no hard limit in this Invention. Further explanation on designing of the scheduling request sequence serving as the first transmission resource request used in this embodiment will be offered below.

Multiple scheduling request sequences which serve as the first transmission resource request can be designed at first. When transmitting the first transmission resource request, STA can choose one from these said scheduling request sequences as the first transmission resource request according to predefined rules. The selection method can be set up as needed, for example, by probability.

When design the scheduling request sequence identifiers, the optional scheduling request sequences which serve as the first transmission resource request can be numbered in index form, then use the numbers as identifiers. Other approaches can also be adopted to identify different scheduling request sequences and there's no hard limit in this Invention.

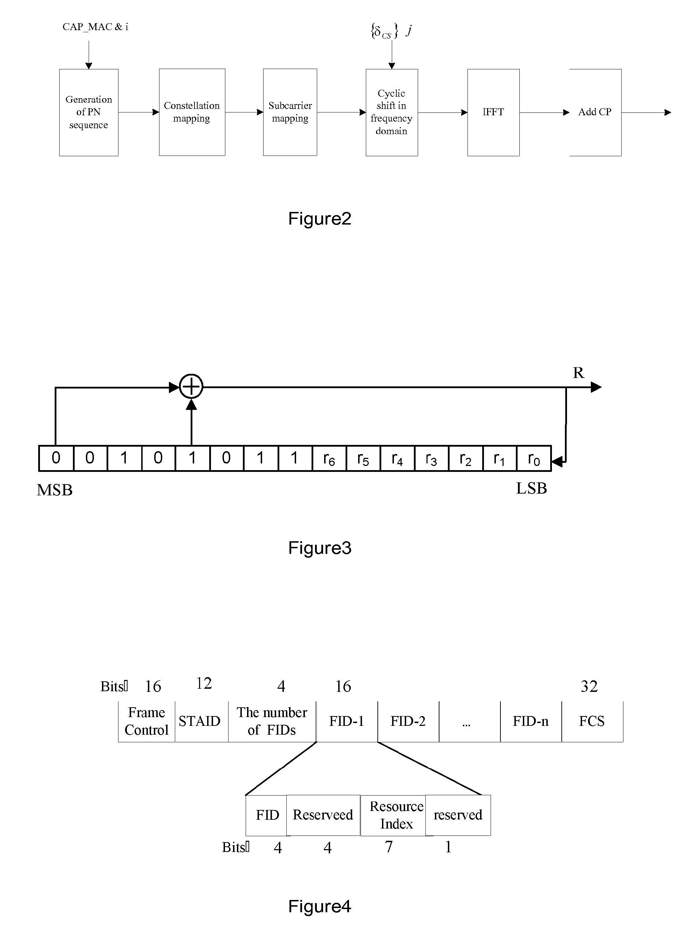

A specific method of generating scheduling request sequence is provided in the First Embodiment Example of this Invention, as shown in Figure 2, including the following steps: generating PN sequence, constellation labeling, subcarrier mapping, generating cyclic shift sequence, inverse fast fourier transform (FFT, Inverse Fast Fourier Transform) and adding CP. In Figure 2,CAP_MAC means the MAC address of CAP should be 7 bits at least, $i$ the PN sequence index ($0 \leq i < 4$), $\{\delta_{CS}\}$ the cyclic shift parameter set and $j$ the cyclic shift parameter index ($0 \leq j < 8$).

The Step of generating PN sequence can be achieved in the way shown in Figure 3, i.e. PN sequence uses the linear feedback shift register sequence at the maximum length calculated by using the generating polynomial $1 + X^{11} + X^{15}$. The initial value of the register is $r_{init} = [00101011r_6r_5r_4r_3r_2r_1r0]_b$, with MSB on the left and LSB on the right; in which, $[r_6r_5r_4r_3r_2r_1r_0]_b$ =CAP_MAC, equal to 7 bits, the lowest MAC address of CAP.

The Step of constellation labeling can be achieved with Binary Phase Shift Keying (BPSK) modulation method. As shown in Table 1, after BPSK modulation the sequence $S_i$ will get the sequence $C_i$.

Table 1

| Input Bit ($b_0$) | I Channel Output | Q Channel Output |
|---|---|---|
| 0 | -1 | 0 |
| 1 | 1 | 0 |

In the Step of subcarrier mapping, the sequence $C_i$ can get the sequence $M_i$ as per the following formula.

$$M_{i,k} = \begin{cases} C_{i,k+112} & \text{if } -112 \leq k < 0 \\ C_{i,k+111} & \text{if } 1 \leq k < 113 \\ 0 & otherwise \end{cases}$$

In the Step of generating cyclic shift sequence, the sequence $M_i$ after subcarrier mapping can get the sequence $T_i^j$ as per the following formula.

$$T_{i,k}^j = M_{i,k} e^{-j\frac{2\pi k \delta_{CS}^j}{N_{IFFT}}}$$

In which, $N_{IFFT}$ stands for the points of IFFT, $k \in [-\frac{N_{IFFT}}{2}, \frac{N_{IFFT}}{2} - 1]$, $\delta_{CS}^j$ means the cyclic shift parameter using sampling points as a apparatus, for a 20MHz system, $N_{IFFT}$=256, $\{\delta_{CS}\}$= {0 32 64 96 128 160 192 224}.

Then, conduct IFFT and add CP to the cyclic shift sequence $T_i^j$ to acquire the scheduling request sequence.

By this way 32 scheduling request sequences can be acquired. After that, use the said scheduling request sequence to initiate the competitive resource request.

Certainly, other methods can be used to generate scheduling request sequence in another embodiment, and there's no hard limit in this Invention.

After that, STA may send the first transmission resource request out from the uplink scheduling request channel.

In the First Embodiment Example of this Invention, the first transmission resource request is transmitted wisely through the uplink scheduling request channel to complete the resource request process in a competitive way. It's unnecessary to monitor if the uplink transmission channel has resources available and even without the uplink transmission resource the resource request can also be conducted. Certainly, in another embodiment the said first transmission resource request can be initiated via other channels like the uplink transmission channel, and there's no hard limit in this Invention.

In the First Embodiment Example of this Invention where the first transmission resource request is initiated from the uplink scheduling request channel, the said scheduling request sequence can be designed to correspond to the position of OFDM symbol in uplink scheduling request channel in order to mark the transmission position of the said scheduling request sequence. Certainly, in another embodiment the transmission position of the scheduling request sequence could also be marked in other ways, and there is no hard limit in this Invention.

When the first transmission resource request is sent from the uplink scheduling request channel, the first transmission resource request can be modulated to the uplink scheduling request channel by means of BPSK, QPSK and so on as needed. Preferably, after assigning the first transmission resource for the said STA, the said CAP can issue the resource allocation instruction via transmission control channel. That is to say, the said CAP could initiate the first transmission resource response from the transmission control channel, carrying the first transmission resource instruction. Accordingly, the said STA would receive the said first transmission resource response in the said transmission control channel to get the first transmission resource. Certainly, the first transmission resource response is issued via other channels in another embodiment, and there's no hard limit in this Invention.

Preferably, after assigning the first transmission resource for the said STA, the said CAP can sent the said first transmission resource response in the form of broadcasting. When using broadcasting to send the first transmission resource response, thesaid STA will receive the correspondent response as per predefined rules. When using the scheduling request sequence to trigger the uplink resource request, STA can receive the first transmission resource response corresponding to the said scheduling request sequence in accordance with the scheduling request sequence index used when sending the scheduling request sequence, the frequency domain cyclic shift parameter index of the said scheduling request sequence, transmission position of the said scheduling request sequence in the uplink scheduling request channel and the system frame number sent by the said scheduling request channel.

A specific format of the first transmission resource response is given in the First Embodiment Example as shown in Table 2.

Table 2 Frame Resource Allocation for Resource Request

| Bit | Definition |
|---|---|
| $b_3b_2b_1b_0$ | Broadcasting type<br>$b_3b_2b_1b_0$=0110, independent resource request frame (assign resource for the independent resource request frame) |
| $b_7b_6b_5b_4$ | Reservation |

(continued)

| Bit | Definition |
|---|---|
| $b_{23}b_{22}\cdots b_8$ allocation 1 | $b_9b_8$ =00, corresponding to the scheduling request from the first OFDM symbol of UL-SRCH |
| | $b_9b_8$ =01, corresponding to the scheduling request from the second OFDM symbol of UL-SRCH |
| | $b_9b_8$ =10, corresponding to the scheduling request from the third OFDM symbol of UL-SRCH |
| | $b_9b_8$ =11, corresponding to the scheduling request from the fourth OFDM symbol of UL-SRCH |
| | $b_{11}b_{10}$, PN sequence index, domain value: 0~3 |
| | $b_{14}b_{13}b_{12}$, PN sequence frequency domain cyclic shift parameter index A cyclic shift of 0 for 000, 32 for 001 ... 224 for 111. |
| | $b_{17}b_{16}b_{15}$, an instruction that the system frame number of the occurrent scheduling request is 3bit at minimum. |
| | $b_{23}b_{22}\cdots b_{18}$, the original position index of the resource assigned for the scheduling request in the signaling/feedback channel, with a scope of 1~63 for domain value in which 0 refers to invalid instruction. |
| $b_{39}b_{38}\cdots b_{24}$ allocation 2 | $b_{25}b_{24}$, the same definition as $b_9b_8$. |
| | $b_{27}b_{26}$, PN sequence index, domain value: 0~3 |
| | $b_{30}b_{29}b_{28}$, PN sequence frequency domain cyclic shift parameter index A cyclic shift of 0 for 000, 32 for 001 ... 224 for 111. |
| | $b_{33}b_{32}b_{31}$, an instruction that the system frame number of the occurrent scheduling request is 3bit at minimum. |
| | $b_{39}b_{38}\cdots b_{34}$, the original position index of the resource assigned for the scheduling request in the signaling/feedback channel, with a scope of 1~63 for domain value in which 0 refers to invalid instruction. |
| $b_{55}b_{54}\cdots b_{40}$ allocation 3 | $b_{41}b_{40}$, the same definition as $b_9b_8$. |
| | $b_{43}b_{42}$, PN sequence index, domain value: 0~3. |
| | $b_{46}b_{45}b_{44}$, PN sequence frequency domain cyclic shift parameter index. A cyclic shift of 0 for 000, 32 for 001 ... 224 for 111. |
| | $b_{49}b_{48}b_{47}$, an instruction that the system frame number of the occurrent scheduling request is 3bit at minimum. |
| | $b_{55}b_{54}\cdots b_{50}$, the original position index of the resource assigned for the scheduling request in the signaling/feedback channel, with a scope of 1~63 for domain value in which 0 refers to invalid instruction. |
| $b_{71}\,b_{70}\cdots b_{56}$ | 16bint CRC scrambled by BSTAID |

Preferably, a format for the second transmission resource request is provided in the First Embodiment Example of this Invention, aiming to support the requested resource based on serviceflow report. Thereinto, the said second transmission resource request includes the identifier of STA, which initiates the said second transmission resource request and amounts to the bandwidth resourcesize requested by each flow in single or multiple service flows, along with identifiers of each service flow. By means of analyzing the said second transmission resource request, CAP can learn each service flow of the said STA and the resource request of each said service flow.

Preferably, the said second transmission resource request may also include the bandwidth resource requested for each service flow. CAP allows STA to choose the requested bandwidth resource type specific to different service flow, making the resource request more flexible and humanized.

The optional bandwidth resource types include:

Increment bandwidth indicates, when assigning second transmission resource for the service flow, the bandwidth resource size that increases or decreases in current request of the said service flow comparing to the bandwidth resource size already assigned for the said service flow.

Total bandwidth indicates, when assigning second transmission resource for the service flow, using the bandwidth resource size in current request of the said service flow to replace the bandwidth resource size already assigned for thesaid service flow.

Preferably, another format for the second transmission resource request is provided in the First Embodiment Example of this Invention, aiming to support the requested resource based on STA report. Thereinto, the said second transmission resource request includes the identifier of STA, which initiates the said second transmission resource request, along with the total bandwidth resource size requested by the said STA.

Preferably, the said second transmission resource request may also include the bandwidth resource requested by the said STA. CAP allows STA to choose the requested bandwidth resource type as needed, making the resource request more flexible and humanized.

The optional bandwidth resource types include:

Increment bandwidth indicates, when assigning second transmission resource for STA, the bandwidth resource size that increases or decreases in current request of the said STA comparing to the bandwidth resource size already assigned for the said STA.

Total bandwidth indicates, when assigning second transmission resource for STA, using the bandwidth resource size in current request of the said STA to replace the bandwidth resource size already assigned for the said STA.

Preferably, a representation method for bandwidth resource is provided in the First Embodiment Example that first design a resource table and then use the index of the said bandwidth resource in the preset resource table to indicate the size of requested bandwidth resource. Therefore, when reporting the requested bandwidth resource, only the index value corresponding to the said bandwidth resource from the table needs to be carried. Especially when the requested bandwidth resource is huge, using the index value in replace of specific bandwidth resource value would greatly reduce the occupied bits and save transmission resource. For intuitive view, here is a sample resource representation as shown in Table 3.

Table 3

| Index | Resource Size (Bits) | Index | Resource Size (Bits) |
|---|---|---|---|
| 0 | BS=0 | 64 | 2689< BS <=2800 |
| 1 | 1< BS <=14 | 65 | 2801< BS <=2912 |
| 2 | 15< BS <=28 | 66 | 2913< BS <=3024 |
| 3 | 29< BS <=42 | 67 | 3025< BS <=3136 |
| 4 | 43< BS <=56 | 68 | 3137< BS <=3360 |
| 5 | 57< BS <=70 | 69 | 3361< BS <=3584 |
| 6 | 71< BS <=84 | 70 | 3585< BS <=3808 |
| 7 | 85< BS <=98 | 71 | 3809< BS <=4032 |
| 8 | 99< BS <=112 | 72 | 4033< BS <=4256 |
| 9 | 113< BS <=126 | 73 | 4257< BS <=4480 |
| 10 | 127< BS <=140 | 74 | 4481< BS <=4704 |
| 11 | 141< BS <=154 | 75 | 4705< BS <=4928 |
| 12 | 155< BS <=168 | 76 | 4929< BS <=5152 |
| 13 | 169< BS <=182 | 77 | 5153< BS <=5376 |
| 14 | 183< BS <=196 | 78 | 5377< BS <=5600 |
| 15 | 197< BS <=210 | 79 | 5601< BS <=5824 |
| 16 | 211< BS <=224 | 80 | 5825< BS <=6272 |

(continued)

| Index | Resource Size (Bits) | Index | Resource Size (Bits) |
|---|---|---|---|
| 17 | 225< BS <=238 | 81 | 6273< BS <=6720 |
| 18 | 239< BS <=252 | 82 | 6721< BS <=7168 |
| 19 | 253< BS <=266 | 83 | 7169< BS <=7616 |
| 20 | 267< BS <=280 | 84 | 7617< BS <=8064 |
| 21 | 281< BS <=308 | 85 | 8065< BS <=8512 |
| 22 | 309< BS <=336 | 86 | 8513< BS <=8960 |
| 23 | 337< BS <=364 | 87 | 8961< BS <=9408 |
| 24 | 365< BS <=392 | 88 | 9409< BS <=9856 |
| 25 | 393< BS <=420 | 89 | 9857< BS <=10304 |
| 26 | 421< BS <=448 | 90 | 10305< BS <=10752 |
| 27 | 449< BS <=476 | 91 | 10753< BS <=11648 |
| 28 | 477< BS <=504 | 92 | 11649< BS <=12544 |
| 29 | 505< BS <=532 | 93 | 12545< BS <=13440 |
| 30 | 533< BS <=560 | 94 | 13441< BS <=14336 |
| 31 | 561< BS <=588 | 95 | 14337< BS <=15232 |
| 32 | 589< BS <=616 | 96 | 15233< BS <=16128 |
| 33 | 617< BS <=644 | 97 | 16129< BS <=17920 |
| 34 | 645< BS <=672 | 98 | 17921< BS <=19712 |
| 35 | 673< BS <=700 | 99 | 19713< BS <=21504 |
| 36 | 701< BS <=728 | 100 | 21505< BS <=23296 |
| 37 | 729< BS <=784 | 101 | 23297< BS <=25088 |
| 38 | 785< BS <=840 | 102 | 25089< BS <=28672 |
| 39 | 841< BS <=896 | 103 | 28673< BS <=32256 |
| 40 | 897< BS <=952 | 104 | 32257< BS <=35840 |
| 41 | 953< BS <=1008 | 105 | 35841< BS <=39424 |
| 42 | 1009< BS <=1064 | 106 | 39425< BS <=43008 |
| 43 | 1065< BS <=1120 | 107 | 43009< BS <=50176 |
| 44 | 1121< BS <=1176 | 108 | 50177< BS <=57344 |
| 45 | 1177< BS <=1232 | 109 | 57345< BS <=64512 |
| 46 | 1233< BS <=1288 | 110 | 64513< BS <=71680 |
| 47 | 1289< BS <=1344 | 111 | 71681< BS <=86016 |
| 48 | 1345< BS <=1400 | 112 | 86017< BS <=100352 |
| 49 | 1401< BS <=1456 | 113 | 100353< BS <=114688 |
| 50 | 1457< BS <=1512 | 114 | 114689< BS <=129024 |
| 51 | 1513< BS <=1568 | 115 | 129025< BS <=143360 |
| 52 | 1569< BS <=1624 | 116 | 143361< BS <=172032 |
| 53 | 1625< BS <=1680 | 117 | 172033< BS <=200704 |
| 54 | 1681< BS <=1736 | 118 | 200705< BS <=229376 |

(continued)

| Index | Resource Size (Bits) | Index | Resource Size (Bits) |
|---|---|---|---|
| 55 | 1737< BS <=1792 | 119 | 229377< BS <=258048 |
| 56 | 1793< BS <=1904 | 120 | 258049< BS <=286720 |
| 57 | 1905< BS <=2016 | 121 | 286721< BS <=344064 |
| 58 | 2017< BS <=2128 | 122 | 344065< BS <=458752 |
| 59 | 2129< BS <=2240 | 123 | 458753< BS <=573440 |
| 60 | 2241< BS <=2352 | 124 | 573441< BS <=802816 |
| 61 | 2353< BS <=2464 | 125 | 802817< BS <=1835008 |
| 62 | 2465< BS <=2576 | 126 | 1835009< BS <=3500000 |
| 63 | 2577< BS <=2688 | 127 | BS >3500000 |

Preferably, resource tables with multiple accuracy scopes can be designed as needed. When conducting resource request, choose the proper resource table in line with the requested resource. The identifier and index of the resource table will be loaded in the resource request and the same resource table can be maintained on CAP side. By means of the identifier and index of the received resource request, locate the resource size of the corresponding index in the relevant resource table and learn the resource size requested by STA.

In the First Embodiment Example of this Invention, the said second transmission resource request can be sent after encapsulating into independent resource request frame. Taking the aforementioned method on the basis of service flow report for example, this embodiment provides a specific independent resource request frame structure, as shown in Figure 4, including frame header, frame body and frame check sequence (FCS, Frame Check Sequence). The frame header contains frame control information, such as frame type (management control in this case), subtype (independent resource request frame in this case), version information and so on; the frame body contains STAID, the number of FID, and single or multiple FID message blocks which comprise service flow identifiers and resource index each. In which, the resource index belongs to the index of requested bandwidth resource in the resource table. In addition, if different resource types are available for allocation, for example, both increment bandwidth and total bandwidth are allowed, then an instruction on the requested resource type can be set up in the bandwidth resource request of the said service flow.

Also, in the body of the independent resource request frame designed in this Invention, STAID field accounts for 12bit, FID number field 4bit, and FCS field 32bit. In which, each FID message block accounts for 16bit, including 4bit FID field, 4bit reserved field, 7bit resource index field and 1bit reserved field. By this way the reading is conducted per byte, making the process simpler.

If using the STA report-based method as above, only frame body of the independent resource request frame shown in Figure 4 needs to be changed, and the STAID and resource index can be encapsulated in the frame body. Besides, if resource tables of multiple accuracy scopes are adopted, the resource table type field can be set up in the frame body and instructions are no longer described here.

After assigning the second transmission resource for the said STA, the said CAP can send the said second transmission resource response via unicasting, with the second transmission resource instruction carried. The said STA receives the corresponding response as per predefined rules. For example, take STAID as the basis for judgment. That is to say, in the second transmission resource request STA carries STAID of its own, and when returning the second transmission resource response to the said STA, CAP also carries STAID of the said STA. Then, STA can confirm if the corresponding response is received correctly by seeing if the second transmission resource response received contains STAID of its own.

Preferably, after assigning the second transmission resource for the said STA, the said CAP can issue the resource allocation instruction via transmission control channel, i.e. the said CAP sends the second transmission resource response in the transmission control channel, carrying the second transmission resource instruction. Accordingly, the said STA will receive the said second transmission resource response in the said transmission control channel and acquire the assigned second transmission resource. Certainly, in another embodiment other channels can be designed to issue the said second transmission resource response, and there's no hard limit in this Invention.

Preferably, when sending the first transmission resource request, if no response is received after the highest wait interval predefined for the first transmission resource request, the current resource request is considered as a failure and the resource request needs to be initiated again; or when sending the second transmission resource request, if no response is received after the highest wait interval predefined for the second transmission resource request, the current resource request is considered as a failure and the resource request needs to be initiated again. The First Embodiment Example of this Invention monitors how long the response returns in order to confirm if the resource request is successful; if not, a new resource request will be initiated in time. Meanwhile, by counting frame number the timing is more accurate and the process will be easier to handle.

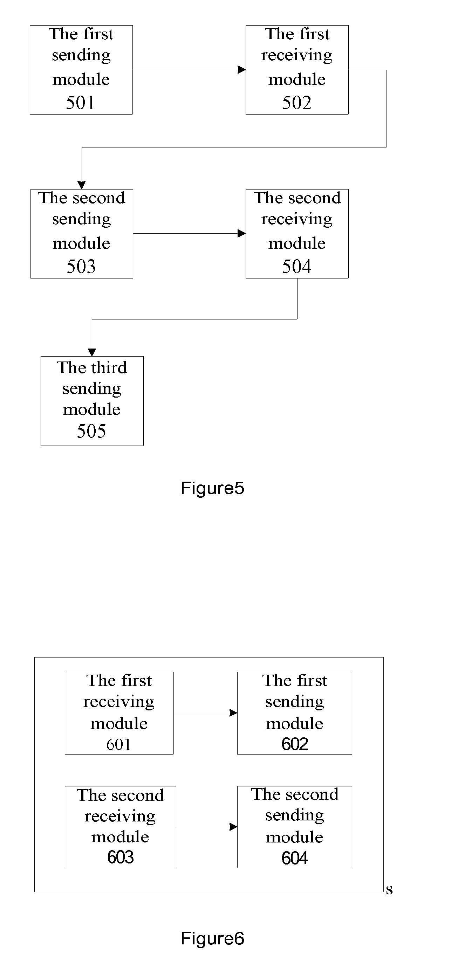

To realize the resource request method in a competitive way, a STA used for resource request is provided in the First Embodiment Example of this Invention, as shown in Figure 5, including:

The first sending module 501, used for sending the first transmission resource request;
The first receiving module 502, used for receiving the first transmission resource response which carries the first transmission resource instruction;
The second sending module 503, which uses the said first transmission resource to send the second transmission resource request;
The second receiving module 504, used to receive the second transmission resource response which carries the second transmission resource instruction; The third sending module 505, which uses the said second transmission resource to send data.

Preferably, in another embodiment, the said STA may also include:

Resource allocation module, located between the second receiving module504 and the third sending module 505 and used to allocate resources for each service flow in accordance with the second transmission resource instruction. Based on the resource allocation result of the said resource allocation module, the said third sending module 505 will transmit data of the transmission resource corresponding to each service flow.

Preferably, the said first transmission resource request can be a scheduling request sequence.

The said first transmission resource request is a scheduling request sequence.

Preferably, the said first sending module 501 is used to send the said scheduling request sequence in the uplinkscheduling request channel.

Preferably, the first receiving module 502 is used to receive the first transmission resource response corresponding to the said scheduling request sequence based on the index of the said scheduling request sequence, the frequency domain cyclic shift parameter index of the said scheduling request sequence, transmission position of the said scheduling request sequence in the uplink scheduling request channel and the system frame number sent by the said scheduling request sequence.

Preferably, the said first receiving module 502 is used to receive the first transmission resource response in the transmission control channel.

Preferably, the said second sending module 503 is used to carry STA identifier and the requested resource in the said second transmission resource request.

Preferably, the said second sending module 503 carries single or multiple service flow identifiers, along with the size of bandwidth resource requested for each service flow in the second transmission resource request to conduct service flow-based resource request.

Preferably, the said second sending module 503 uses the index from the preset resource table to indicate the size of bandwidth resource in the said second transmission resource request.

Preferably, the said second sending module 503 is also used to carry the number of service flow requesting resource in the said second transmission resource request.

Preferably, the said second sending module 503 is used to encapsulate the said second transmission resource request into an independent resource request frame and send it out.

The said independent resource request frame contains frame header, frame body and frame check sequence (FCS);
The said frame body contains: STA identifier and single or multiple FID message blocks, with service flow identifier and resource index included in each FID message block.

Preferably, the said second sending module 503 is used to encapsulate the said second transmission resource request into another independent resource request frame and send it out.

The said independent resource request frame contains frame header, frame body and frame check sequence (FCS);

The said frame body contains: STA identifier, the number of the service flow and single or multiple FID message blocks, with service flow identifier and resource index included in each FID message block.

Preferably, another embodiment includes a first repeat module, which connects with the said first sending module 501 and the first receiving module 502 separately. When the said first sending module 501 initiates the first transmission resource request and the timing starts, if the said first receiving module 502 doesn't receive the first transmission resource response after the highest wait interval predefined for the first transmission resource request, the current resource request is regarded as failed, and the said first sending module 501 will be triggered to resend the first transmission resource request.

Preferably, another embodiment includes a second repeat module, which connects with the said second sending module 503 and the second receiving module 504 separately. When the said second sending module 503 initiates the second transmission resource request, if the said second receiving module 504 doesn't receive the second transmission resource response after the highest wait interval predefined for the second transmission resource request, the current resource request is regarded as failed, and the said first sending module 501 will be triggered to resend the first transmission resource request.

Preferably, the said second transmission resource request also contains the bandwidth resource requested for each service flow.

Preferably, the said bandwidth resource types include:

Increment bandwidth indicates, when assigning second transmission resource for the service flow, the bandwidth resource size that increases or decreases in current request of the said service flow comparing to the bandwidth resource size already assigned for the said service flow.

Total bandwidth indicates, when assigning second transmission resource for theservice flow, using the bandwidth resource size in current request of the said service flow to replace the bandwidth resource size already assigned for the said service flow.

Preferably, the said second transmission resource request can also base on STA to report the resource request;

That is to say, the said second transmission resource request may contain the total amount of bandwidth resource requested by the STA which initiates the second transmission resource request.

Preferably, the said preset resource tables include tables of multiple accuracy scopes.

To realize the resource request method in a competitive way, a CAP for resource request is provided in the First Embodiment Example of this Invention, as shown in Figure 6, including:

The first receiving module 601, used to receive the first transmission resource request and then allocate the first transmission resource for the corresponding STA; The first sending module 602, used for sending the first transmission resource response, which carries the first transmission resource instruction, to the said corresponding STA; The second receiving module 603, used to receive the second transmission resource request and then allocate the second transmission resource for the corresponding STA;

The second sending module 604, used for sending the second transmission resource response, which carries the second transmission resource instruction, to the said corresponding STA;

The said first transmission resource aims to send the second transmission resource request;

The said second transmission resource aims at sending data by STA.

Preferably, the said first receiving module 601 receives the said first transmission resource request which is a scheduling request sequence from the uplink scheduling request channel; the said first sending module 602 is used to carry the corresponding index of the said scheduling request sequence, the frequency domain cyclic shift parameter index of the said request sequence, the transmission position of the said request sequence in the uplink scheduling request channel and the system frame number sent by the said scheduling request sequence.

Preferably, the said first sending module 602 is used to send the said first transmission resource response in the transmission control channel. Preferably, the said first sending module 602 is used to send the said first transmission resource response via broadcasting.

Preferably, the said second sending module 604 is used to send the said second transmission resource response in the transmission control channel.

Preferably, the said second sending module 604 is used to send the said second transmission resource response via unicasting.

Preferably, in the said second transmission resource response the said second sending module 604 carries the corresponding STA identifier and the resource assigned for the said STA.

To realize the aforesaid resource request method in a competitive way, a system specific to realize resource request is provided in the First Embodiment Example of his Invention, including the aforesaid STA and CAP which will exchange and compete to fulfill the resource request process. This is especially applicable for scenarios where the STA doesn't have transmission resource.

A method for resource request is provided in the First Embodiment Example of this Invention, including:

Generate the transmission resource request which includes STA identifier, identifiers for single or multiple service flows, and the bandwidth resource size requested for each service flow;
Send the said transmission resource request.

Preferably, the said transmission resource request also contains the amount of service flow which is requesting resource.

Preferably, encapsulate the said transmission resource request into an independent resource request frame and send it out.

The said independent resource request frame contains frame header, frame body and FCS;

The said frame body contains: STA identifier and single or multiple FID message blocks, with service flow identifier and resource index included in each FID message block.

Preferably, encapsulate the said transmission resource request into another independent resource request frame and send it out.

The said independent resource request frame contains frame header, frame body and FCS;

The said frame body contains: STA identifier, number of the service flow and single or multiple FID message blocks, with service flow identifier and resource index included in each FID message block.

Preferably, the said transmission resource request also includes the type of the bandwidth resource requested by each service flow.

Preferably, types of the said bandwidth resource include:

Increment bandwidth indicates, when assigning transmission resource for service flow, the bandwidth resource size that increases or decreases in current request of the said service flow comparing to the bandwidth resource size already assigned for the said service flow.

Total bandwidth indicates, when assigning transmission resource for service flow, using the bandwidth resource size in current request of the said service flow to replace the bandwidth resource size already assigned for the said service flow.

Preferably, the said bandwidth resource size is denoted with the index from the  preset resource tables.

Preferably, the said transmission resource request carries the preset resource table, different types of resource table corresponding to different accuracy scopes. The said preset resource tables contain tables of multiple accuracy scopes.

Another method for resource request is provided in the First Embodiment Example, including.

Generate the transmission resource request which includes STA identifier and the bandwidth resource size requested by the said STA; and then send the said transmission resource request.

Preferably, the said transmission resource request also includes the type of the bandwidth resource requested by STA.

Preferably, types of the said bandwidth resource include:

Increment bandwidth indicates, when assigning transmission resource for STA, the bandwidth resource size that increases or decreases in current request of the said STA comparing to the bandwidth resource size already assigned for thesaid STA.

Total bandwidth indicates, when assigning transmission resource for STA, using the bandwidth resource size in current request of thesaid STA to replace the bandwidth resource size already assigned for the said STA.

Preferably, the said bandwidth resource size is denoted with the index from the preset resource tables.

Preferably, the said transmission resource request carries the preset resource table, different types of resource table corresponding to different accuracy scopes. The said preset resource tables contain tables of multiple accuracy scopes.

Second Embodiment Example

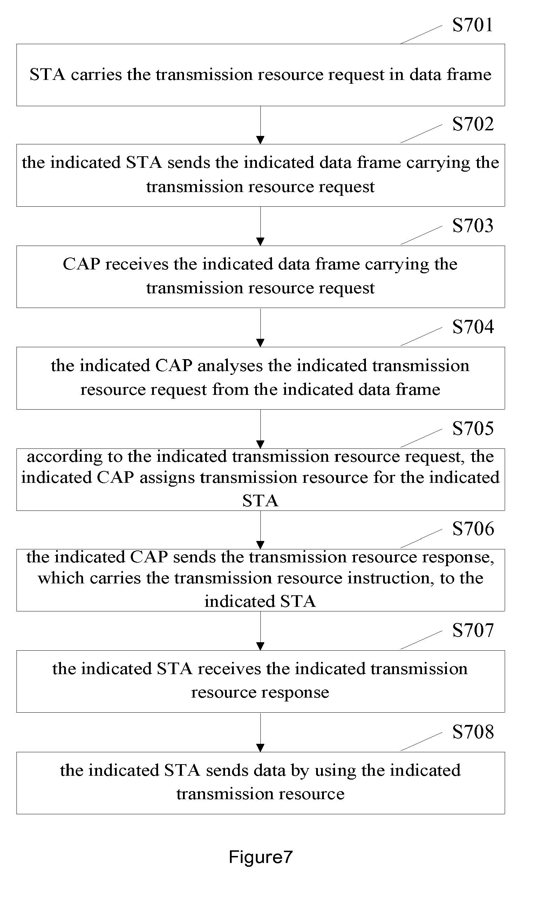

The Second Embodiment Example of this Invention also provides a resource request method that by using the occasion and resource of uplink data transmission send the transmission resource request to CAP along with the uplink data, as shown in Figure 7, including the following steps:

Step S701: STA carries the transmission resource request in data frame;
Step S702: the said STA sends the said data frame carrying the transmission resource request;
Step S703: CAP receives the said data frame carrying the transmission resource request;
Step S704: the said CAP analyses the said transmission resource request from the said data frame;
Step S705: according to the said transmission resource request, the said CAP assigns transmission resource for the said STA;
Step S706: the said CAP sends the transmission resource response, which carries the transmission resource instruction, to thesaid STA;

Step S707: the said STA receives the said transmission resource response;
Step S708: the said STA sends data by using the said transmission resource.

The above method is adopted in the Second Embodiment Example to send transmission resource request to CAP along with the uplink data. With the uplink data transmission, it is possible to use the aforesaid channel associated resource request method to demand resource, dispensing with the process that request uplink transmission resource first and then send the said transmission resource request. Therefore, the resource request process features less exchanged Steps and time. Preferably, STA can also carry the piggback request indication in the data frame which loads the transmission resource request to denote the presence of the said transmission resource request. Accordingly, in the wake of receiving the data frame, CAP is able to judge if the said data frame loads the transmission resource request through the said piggback request indication. Certainly, another method is also available to see if the said data frame loads the transmission resource request. Instead of carrying the piggback request indication, another embodiment achieves this by setting up specific field to carry the said transmission resource request and then analyzing the corresponding field, and there's no hard limit in this Invention.

Considering when analyzing data frame, CAP intends to Parse the frame header first to acquire parameter information, so when encapsulating the Piggback request indication into the data frame, it is acceptable to encapsulate the said Piggback request indication into the header of the said data frame.
In practical, when fulfilling the Piggback request indication, a field for the piggback request indication can be established in the header of data frame. Then the field value will indicate if the transmission resource request exists, for example, 1 stands for the existence of transmission resource request while 0 stands for the inexistence.

The said field for Piggback request indication can be new or field existing in the frame header, for example, take an idle filed and redefine it for the Piggback request indication, and there's no hard limit in this Invention. The position of the said filed for Piggback request indication in the frame header can be set as per preset rules, and there's no hard limit in this Invention.

STA can carry the said transmission resource request in the body of said data frame. In practical, a field for the Ppiggback request indication can be established in the header of data frame to carry the said transmission resource request. If the data frame doesn't carry the transmission resource request, then it's not necessary to establish the field for the Ppiggback request indication in the header of data frame, or fill the field for the Ppiggback request indication with a fixed value.

The said field for channel associated resource request can be new or field existing in the frame body, for example, take an idle filed and redefine it for the channel associated resource request, and there's no hard limit in this Invention. The position of the said filed for channel associated resource request in the frame body can be set as per preset rules, for example, the field for channel associated resource request should be the first few bits of the fame body, and there's no hard limit in this Invention.

Preferably, a format for channel associated transmission resource request is provided in the Second Embodiment Example of this Invention, aiming to support the requested resource based on service flow report. Thereinto, the said transmission resource request includes the identifier of STA, which initiates the said transmission resource request and amounts to the bandwidth resource size requested by each service flow in single or multiple service flows, along with identifiers of each service flow. By means of analyzing the said transmission resource request, CAP can learn each service flow of the said STA and the resource request of each said service flow.
Preferably, the said transmission resource request may also include the type of the bandwidth resource requested for each service flow. CAP allows STA to choose the requested bandwidth resource type specific to different service flow, making the resource request more flexible and humanized.

The optional bandwidth resource types include:

Increment bandwidth indicates, when assigning second transmission resource for the service flow, the bandwidth resource size that increases or decreases in current request of the said service flow comparing to the bandwidth resource size already assigned for the said service flow.

Total bandwidth indicates, when assigning second transmission resource for theservice flow, using the bandwidth resource size in current request of the said service flow to replace the bandwidth resource size already assigned for the said service flow.

Preferably, another format for the transmission resource request is provided in the Second Embodiment Example of this Invention, aiming to support the requested resource based on STA report. Thereinto, the said transmission resource request includes the identifier of STA, which initiates the said transmission resource request, along with the total bandwidth resource size requested by thesaid STA.

Preferably, the said transmission resource request may also include the type of the bandwidth resource requested by the said STA. CAP allows STA to choose the requested bandwidth resource type as needed, making the resource request more flexible and humanized.

The optional bandwidth resource types include:

Increment bandwidth indicates, when assigning second transmission resource for STA, the bandwidth resource size that increases or decreases in current request of the said STA comparing to the bandwidth resource size already assigned for thesaid STA.

Total bandwidth indicates, when assigning second transmission resource for STA, using the bandwidth resource size in current request of the said STA to replace the bandwidth resource size already assigned for the said STA.

Preferably, a representation method for bandwidth resource is provided in the Second Embodiment Example that first design a resource table (like Table 3) and then use the index of the said bandwidth resource from the preset resource table to indicate the size of requested bandwidth resource. Therefore, when reporting the requested bandwidth resource, only the index value corresponding to the said bandwidth resource in the table needs to be carried. Especially when the requested bandwidth resource is huge, using the index value in replace of specific bandwidth resource value would greatly reduce the occupied bits and save transmission resource.

Preferably, resource tables with multiple accuracy scopes can be designed as needed. When conducting resource request, choose the proper resource table in line with the requested resource. The identifier and index of the resource table will be loaded in the resource request and the same resource table can be maintained on CAP side. By means of the identifier and index of the received resource request, locate the resource size of the corresponding index from the relevant resource table and thus learn the resource size requested by STA.

The Second Embodiment Example of this Invention provides a specific data frame structure carrying transmission resource request, including fame header, frame body and FCS. The frame header contains the field for channel associated resource request; if the field value denotes there's transmission resource request in the frame body, the frame body contains the field for channel associated resource request. The said field for channel associated resource request contains single or multiple FID message blocks, which comprise service flow identifiers (FID) and resource index each. In which, the resource index belongs to the index of requested bandwidth resource from the resource table.

In another embodiment, the FID message block also contains the type field of resource table in order to support resources of different accuracy scopes.In addition, if different resource types are available for allocation, for example, both increment bandwidth and total bandwidth are allowed, then an instruction on the resource type requested by the service flow can be set up in the FID message block.

If using the STA report-based method as above, only the content carried in the field for channel associated resource request needs to be changed, and then have the resource table identifier and resource index carried. Instructions are no longer described here.

After assigning transmission resource for the said STA, the said CAP can send the said transmission resource response via unicasting, with the transmission resource instruction carried. The said STA receives the corresponding response as per predefined rules. For example, take STAID as the basis for judgment. That is to say, in the transmission resource request STA carries STAID of its own, and when returning the transmission resource response to the said STA, CAP also carries STAID of the said STA. Then STA can confirm if the corresponding response is received correctly by seeing if the transmission resource response received contains STAID of its own.

Preferably, after assigning transmission resource for the said STA, the said CAP can issue resource allocation instruction via transmission control channel, i.e. the said CAP sends transmission resource response in the transmission control channel, carrying the transmission resource instruction. Accordingly, the said STA will receive the said transmission resource response in the said transmission control channel and acquire the assigned transmission resource. Certainly, in another embodiment other channels can be designed to issue the said transmission resource response, and there's no hard limit in this Invention.

Preferably, after receiving the transmission resource response, STA can also base on the said transmission resource instruction to allocate resources among each service flow before using the transmission resource to transmit data.

Preferably, when STA sends the data frame carrying the transmission resource request, if no response is received after the highest wait interval predefined, the current resource request is considered as a failure and the resource request needs to beinitiated again. The Second Embodiment Example of this Invention monitcrs how long the response returns in order to confirm if the resource request is successful; if not, a new resource request will be initiated in time. Meanwhile, by counting frame number the timing is more accurate and the process will be easier to handle.

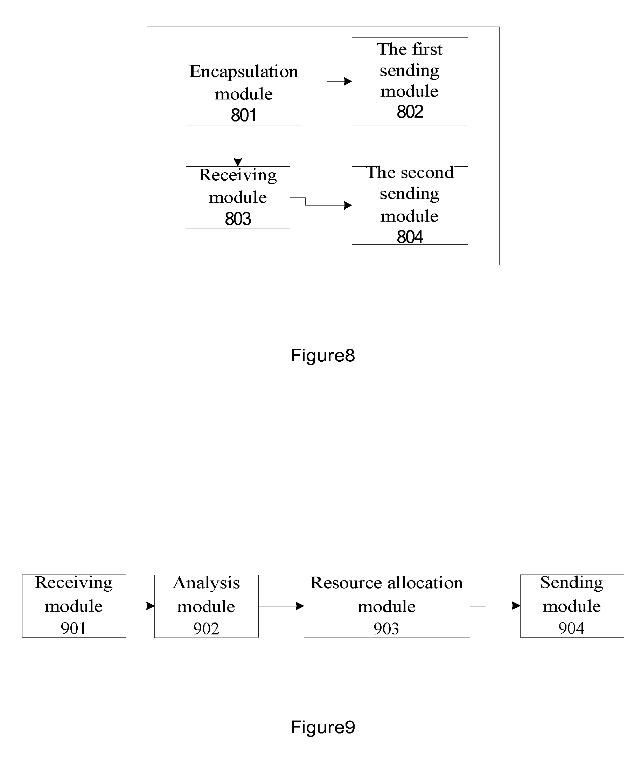

To realize the channel associated resource request method as above, a STA used for resource request is provided in the Second Embodiment Example of this Invention, as shown in Figure 8, including:

Encapsulation module 801, used to carry the transmission resource request in data frame;

The first sending module 802, used to send the said data frame carrying the transmission resource request. Receiving module 803, used to receive the transmission resource response, which carries the transmission resource instruction;

The second sending module 804, which uses the said transmission resource to send data.

Preferably, in another embodiment, the said STA may also include:

Resource allocation module, located between the receiving module 803 and the second sending module 804 and used to allocate resources for each service flow in accordance with the said transmission resource instruction. Based on the resource allocation result of the said resource allocation module, the said second sending module 804 will transmit data of the transmission resource corresponding to each service flow.

Preferably, the said encapsulation module 801 can also encapsulate thePpiggback request indication in data frame to denote the presence of the said transmission resource request.

Preferably, the said encapsulation module 801 can carry the said Ppiggback request indication in header of the said data frame.

Preferably, the said encapsulation module 801 can set up a field in header of the data frame to denote the presence of the said transmission resource request by field value.

Preferably, the said encapsulation module 801 can carry the said transmission resource request in body of the said data frame.

Preferably, the said encapsulation module 801 can set up a field in body of the data frame to carry the said transmission resource request.

Preferably, the said transmission resource request can base on service flow to report the resource request:

That is to say, the said transmission resource request can include identifiers for single or multiple service flows, and the size of bandwidth resource requested for each service flow.

Preferably, the said transmission resource request can also include the tpye of the bandwidth resource requested for each service flow.

Preferably, types of the said bandwidth resource include:

Increment bandwidth indicates, when assigning transmission resource for service flow, the bandwidth resource size that increases or decreases in current request of the said service flow comparing to the bandwidth resource size already assigned for the said service flow.

Total bandwidth indicates, when assigning transmission resource for service flow, using the bandwidth resource size in current request of the said service flow to replace the bandwidth resource size already assigned for the said service flow.

Preferably, the said transmission resource request can base on STA to report the resource request:

That is to say, the said transmission resource request may include the total amount of bandwidth resource requested by STA which initiates the said transmission resource request.

Preferably, the said transmission resource request can also include the type of the bandwidth resource.

Preferably, types of the said bandwidth resource include:

Increment bandwidth indicates, when assigning transmission resource for STA, the bandwidth resource size that increases or decreases in current request of the said STA comparing to the bandwidth resource size already assigned for the said STA;

Total bandwidth indicates, when assigning transmission resource for STA, using the bandwidth resource size in current request of thesaid STA to replace the bandwidth resource size already assigned for the said STA.

Preferably , the said transmission resource request includes identifier of STA, which initiates the said transmission resource request; the said transmission resource response carries identifier of the said STA.

Preferably, use the index from preset resource tables to denote the size of bandwidth resource.

Preferably, the said preset resource tables include tables of multiple accuracy scopes.

Preferably, the said second sending module 804 transmits data of the transmission resource corresponding to each service flow.

Preferably, the said receiving module 803 can receive the said transmission resource response in the transmission control channel.

Preferably, in another embodiment, the said STA also includes:

Regarding the repeat model, when the said first sending module 802 initiates the said data frame carrying transmission resource request and the timing starts, if the said receiving module 803 doesn't receive the said transmission resource response after the highest wait interval predefined, the current resource request is regarded as failed; when having another data frame transmission, the encapsulation module 801 is triggered to carry the said transmission resource request in data frame and resend the resource request.

To realize the channel associated resource request method as above, a CAP used for resource request is provided in the Second Embodiment Example of this Invention, as shown in Figure 9, including:

Receiving module 901, used to receive data frame which carries the transmission resource request;
Analysis module 902, used to parse the said transmission resource request from the said data frame;
Resource allocation module 903, used to allocate transmission resource for STA according to the said transmission resource request;
Sending module 904, used to send the transmission resource response, which carries the transmission resource instruction, to the said corresponding STA.

Preferably, the said data frame can also include the piggback request indication used to denote the presence of the said transmission resource request. Accordingly, the said analysis module 902 can learn the existence of transmission resource request by analyzing the piggback request indication in data frame.

Preferably, a field is established in the header of data frame and the field value can denote if the said transmission resource request exists. Accordingly, the said analysis module 902 can learn the existence of transmission resource request by analyzing the field for piggback request indication in header of the data frame.

Preferably, the said transmission resource request is carried in the body of data frame. Accordingly, the said analysis module 902 can acquire the said transmission resource request by analyzing the body of data frame.

Preferably, a field is established in body of the said data frame, carrying the said transmission resource request. Accordingly, the said analysis module 902 can acquire the said transmission resource request by analyzing the field for associated channel resource request in the body of data frame.

Preferably, the said transmission resource request can base on service flow to report the resource request:

That is to say, the said transmission resource request can include identifiers for single or multiple service flows, and the size of bandwidth resource requested for each service flow.

Preferably, the said transmission resource request can also include the type of the bandwidth resource requested for each service flow.

Preferably, types of the said bandwidth resource include:

Increment bandwidth indicates, when assigning transmission resource for service flow, the bandwidth resource size that increases or decreases in current request of the said service flow comparing to the bandwidth resource size already assigned for the said service flow;

Total bandwidth indicates, when assigning transmission resource for service flow, using the bandwidth resource size in current request of the said service flow to replace the bandwidth resource size already assigned for the said service flow.

Preferably, the said transmission resource request can base on STA to report the resource request:

That is to say, the said transmission resource request include the total amount of bandwidth resource requested by STA which initiates the said transmission resource request.

Preferably, the said transmission resource request can also include the tpye of the bandwidth resource.

Preferably, types of the said bandwidth resource include:

Increment bandwidth indicates, when assigning transmission resource for STA,the bandwidth resource size that increases or decreases in current request of the said STA comparing to the bandwidth resource size already assigned for thesaid STA;
Total bandwidth indicates, when assigning transmission resource for STA, using the bandwidth resource size in current request of the said STA to replace the bandwidth resource size already assigned for the said STA.

Preferably , the said transmission resource request includes the identifier of STA, which initiates the said transmission resource request; the said transmission resource response carries identifier of the said STA.

Preferably, use the index from preset resource tables to denote the size of bandwidth resource.

Preferably, the said preset resource tables include tables of multiple accuracy scopes.

Preferably, the said sending module 904 can send the said transmission resource request to the said corresponding STA in the transmission control channel.

Preferably, the said sending module 904 can send the said transmission resource response to the corresponding STA via unicasting.

To realize the aforesaid channel associated resource request method, a system specific to realize resource request is provided in the Second Embodiment Example of this Invention, including the aforesaid STA and CAP which will exchange to make full use of the occasion and resource of data transmission to fulfill the resource request process in a channel associated way.

**Third Embodiment Example**

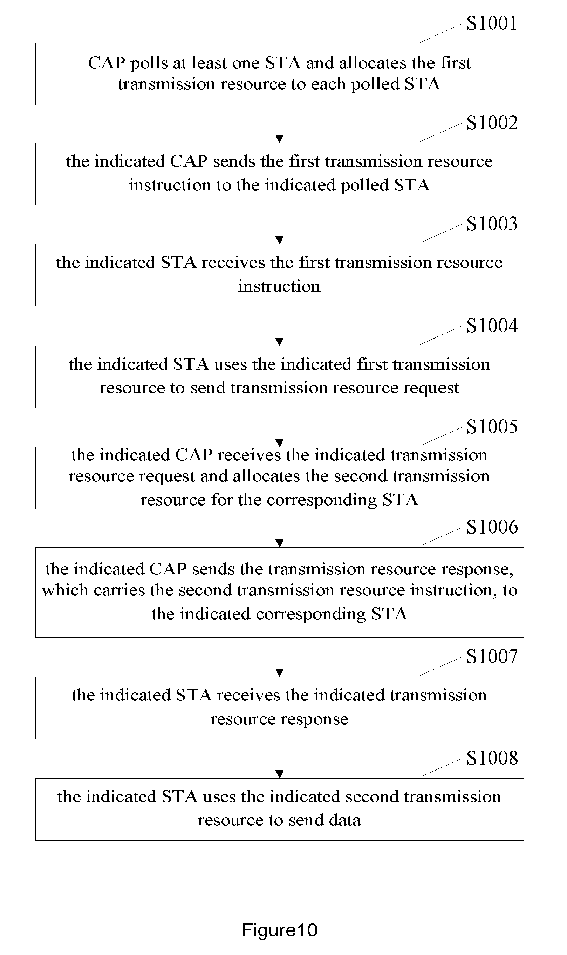

A method for resource allocation is provided in the Third Embodiment Example of this Invention that CAP actively polls at least one STA to allocate resource used for sending resource request, as shown in Figure 10, including the following steps:

Step S1001: CAP polls at least one STA and allocates the first transmission resource to each polled STA;
Step S1002: the said CAP sends the first transmission resource instruction to the said polled STA;
Step S1003: the said STA receives the first transmission resource instruction;
Step S1004: the said STA uses the said first transmission resource to send transmission resource request;
Step S 1005: the said CAP receives the said transmission resource request and allocates the second transmission resource for the corresponding STA;
Step S1006: the said CAP sends the transmission resource response, which carries the second transmission resource instruction, to the said corresponding STA;
Step S1007: the said STA receives the said transmission resource response;
Step S1008: the said STA uses the said second transmission resource to send data.

In the Third Embodiment Example of this Invention, CAP actively allocates the first transmission resource for STA in a polling way. Therefore, STA can use the first transmission resource to initiate resource request, without obtaining the transmission resource first before initiating uplink transmission data request.

Preferably, CAP can use the preset polling strategies to poll STA:

For example, set up parameters like polling order, polling interval and resource allocation condition, by which the STA will be polled. In the Third Embodiment Example of this Invention, the established resource allocation condition is that all polled STA will have resource allocated.

Preferably, the said polling strategy can also be: see if there's transmission resource available for allocation currently; if there's transmission resource able for allocation, start the polling Step. Therefore, when having the transmission resource available for allocation, CAP will actively allocate the transmission resource for STA without letting STA request first, which helps reduce the exchange steps during the resource request process and speed up the process of the whole system.

The said CAP can trigger the judgment on current bandwidth resource available for allocation as per predefined rules, for example, periodic judgment, real-time judgment or other assumptions, and there's no hard limit in this Invention.

After allocating the first transmission resource for the said STA, the said CAP can send the first transmission resource instruction to the said STA via unicasting.

Preferably, after assigning the first transmission resource for the said STA, the said CAP can issue the resource allocation instruction via transmission control channel. That is to say, the said CAP could initiate the first transmission resource instruction from the transmission control channel. Accordingly, the said STA would receive the said first transmission resource instruction in the said transmission control channel to get the first transmission resource. Certainly, the first transmission resource instruction can be issued via other channels in another embodiment, and there's no hard limit in this Invention.

Preferably, a format for transmission resource request is provided in the Third Embodiment Example of this Invention, aiming to support the requested resource based on service flow report. Thereinto, the said transmission resource request includes the identifier of STA, which initiates the said second transmission resource request, identifiers of single or multiple service flows and the size of bandwidth resource requested for each service flow. By means of analyzing the said transmission resource request, CAP can learn each service flow of the said STA and the resource request of each said service flow.

Preferably, the said transmission resource request may also include the type of the bandwidth resource requested for each service flow. CAP allows STA to choose the requested bandwidth resource type specific to different service flow, making the resource request more flexible and humanized.

The optional bandwidth resource types include:

Increment bandwidth indicates, when assigning second transmission resource for the service flow, the bandwidth resource size that increases or decreases in current request of the said service flow comparing to the bandwidth resource size already assigned for the said service flow.

Total bandwidth indicates, when assigning second transmission resource for the service flow, using the bandwidth resource size in current request of the said service flow to replace the bandwidth resource size already assigned for the said service flow.

Preferably, another format for transmission resource request is provided in the Third Embodiment Example of this Invention, aiming to support the requested resource based on STA report. Thereinto, the said transmission resource request includes the identifier of STA, which initiates the said transmission resource request, along with the total size of bandwidth resource requested by the said STA.

Preferably, the said transmission resource request may also include the type of the bandwidth resource requested by the said STA. CAP allows STA to choose the requested bandwidth resource type as needed, making the resource request more flexible and humanized.

The optional bandwidth resource types include:

Increment bandwidth indicates, when assigning second transmission resource for STA, the bandwidth resource size that increases or decreases in current request of the said STA comparing to the bandwidth resource size already assigned for the said STA;

Total bandwidth indicates, when assigning second transmission resource for STA, using the bandwidth resource size in current request of the said STA to replace the bandwidth resource size already assigned for the said STA.

Preferably, a representation method for bandwidth resource is provided in the Third Embodiment Example of this Invention that first design a resource table (like Table 3) and then use the index of the said bandwidth resource from the preset resource table to indicate the size of requested bandwidth resource. Therefore, when reporting the requested bandwidth resource, only the index value corresponding to the said bandwidth resource in the table needs to be carried. Especially when the requested bandwidth resource is huge, using the index value in replace of specific bandwidth resource value would greatly reduce the occupied bits and save transmission resource.

Preferably, resource tables with multiple accuracy scopes can be designed as needed. When conducting resource request, choose the proper resource table in line with the requested resource. The identifier and index of the resource table will be loaded in the resource request and the same resource table can be maintained on CAP side. By means of the identifier and index of the received resource request, locate the resource size of corresponding index from the relevant resource table and thus learn the resource size requested by STA.

In the Third Embodiment Example of this Invention, the said transmission resource request can be sent by loading into the resource request frame. Taking the aforementioned method on the basis of service flow report for example, this embodiment provides a specific resource request frame structure, as shown in Figure 4, including frame header, frame body and FCS. The frame header contains frame control information, such as frame type (management control in this case), subtype (independent resource request frame in this case), version information and so on; the frame body contains the number of STAID, the number of FID, and single or multiple FID message blocks which comprise service flow identifiers and resource index each. In which, the resource index belongs to the index of requested bandwidth resource from the resource table. In addition, if different resource types are available for allocation, for example, both increment bandwidth and total bandwidth are allowed, then an instruction on the requested resource type can be set up in the bandwidth resource request of the said service flow.

Also, in the body of the independent resource request frame designed in this Invention, STAID field accounts for 12bit, FID number field 4bit, and FCS field 32bit. In which, each FID message block accounts for 16bit, including 4bit FID field, 4bit reserved field, 7bit resource index field and 1bit reserved field. By this way the reading is conducted per byte, making the process simpler.

If using the STA report-based method as above, only body of the independent resource request frame shown in Figure 4 needs to be changed, and the STAID and resource index can be encapsulated in the frame body. Besides, if resource tables of multiple accuracy scopes are adopted, the resource table type field can be set up in the frame body. Instructions are no longer described here.

After assigning the second transmission resource for the said STA, the said CAP can send the said transmission resource response via unicasting, with the second transmission resource instruction carried. The said STA receives the corresponding response as per predefined rules. For example, take STAID as the basis for judgment. That is to say, in the transmission resource request STA carries STAID of its own, and when returning the transmission resource response to the said STA, CAP also carries STAID of the said STA. Then, STA can confirm if the corresponding response is received correctly by seeing if the transmission resource response received contains STAID of its own.

Preferably, the said CAP can send the transmission resource response via transmission control channel, carrying the second transmission resource instruction. Accordingly, the said STA will receive the said transmission resource response in the said transmission control channel and acquire the assigned second transmission resource. Certainly, in another embodiment other channels can be designed to issue the said transmission resource response, like downlink transmission channel, and there's no hard limit in this Invention.

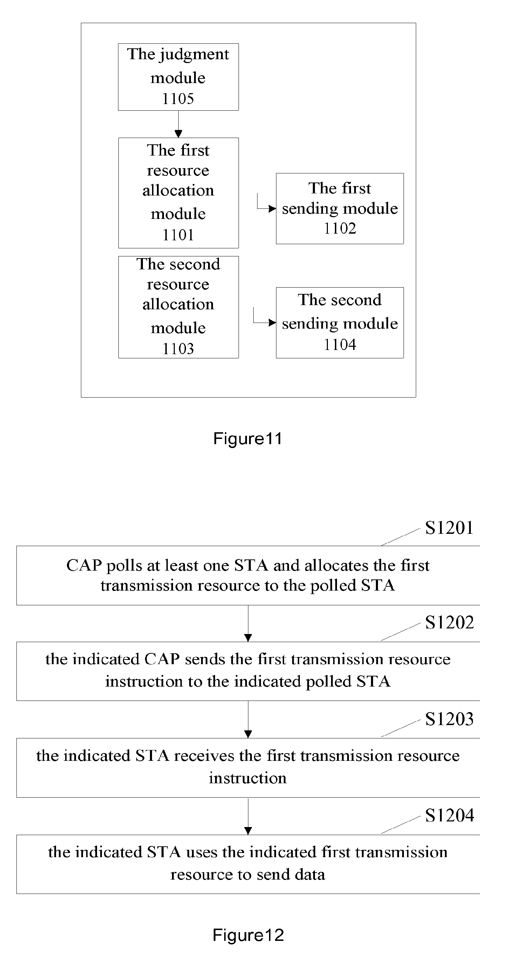

To realize the aforesaid polling allocation, a CAP used for realizing resource allocation is provided in the Third Embodiment Example of this Invention, as shown in Figure 11, including:

The first resource allocation module 1101, used to poll at least one STA and allocate the first transmission resource for the polled STA;
The first sending module 1102, used to send the first transmission resource instruction to the polled STA;
The second resource allocation module 1103, used to receive the transmission resource request and allocate the second transmission resource for the corresponding STA;
The second sending module 1104, used to send the transmission resource response, which carries the second transmission resource instruction, to the said corresponding STA;
The said first transmission resource is used to send transmission resource request by STA;
The said second transmission resource is used to send data by STA.

Preferably, the said second resource allocation module 1103 supports the resource request based on service flow report. The said resource requests based on service flow report include: identifier of STA, identifiers of single or multiple service flows, and the size of bandwidth resource requested for each service flow. By means of analyzing the said transmission resource request, the said second resource allocation module 1103 can learn each service flow of the said STA and the resource request of each said service flow.

Preferably, the said transmission resource request may also includethe type of the bandwidth resource requested for each service flow. The said second resource allocation module 1103 allows STA to choose the requested bandwidth resource type specific to different service flow, making the resource request more flexible and humanized.

The optional bandwidth resource types include:

Increment bandwidth indicates, when assigning second transmission resource for the service flow, the bandwidth resource size that increases or decreases in current request of the said service flow comparing to the bandwidth resource size already assigned for the said service flow.

Total bandwidth indicates, when assigning second transmission resource for the service flow, using the bandwidth resource size in current request of the said service flow to replace the bandwidth resource size already assigned for thesaid service flow.

Preferably, the said second resource allocation module 1103 supports the resource request based on STA report. The said resource requests based on STA report include: identifier of STA, which initiates the said transmission resource request, and the total amount of bandwidth resource requested by the said STA. By means of analyzing the said transmission resource request, the said second resource allocation module 1103 can learn the overall resource request by the said STA.

Preferably, the said transmission resource request may also include the type of the bandwidth resource requested by the said STA. The said second resource allocation module 1103 allows STA to choose the requested bandwidth resource type as needed, making the resource request more flexible and humanized.
The optional bandwidth resource types include:

Increment bandwidth indicates, when assigning second transmission resource for STA, the bandwidth resource size that increases or decreases in current request of the said STA comparing to the bandwidth resource size already assigned for the said STA;

Total bandwidth indicates, when assigning second transmission resource for STA, using the bandwidth resource size in current request of the said STA to replace the bandwidth resource size already assigned for the said STA. Preferably, use the index of the said bandwidth resource from preset resource tables to denote the size of bandwidth resourcerequested.

Preferably, the said preset resource tables include tables of multiple accuracy scopes.

Preferably, the said first sending module 1102 can send the said first transmission resource instruction in the transmission control channel.

Preferably, the said first sending module 1102 can send the said first transmission resource instruction via unicasting.

Preferably, the said second sending module 1104 can send the said transmission resource response in the transmission control channel.

Preferably, the said second sending module 1104 can send the said transmission resource response via unicasting.

Preferably, the said CAP also contains:

The judgment module 1105 is used to judge if there's transmission resource available for allocation now. If there's transmission resource available for allocation, the resource allocation instruction will be sent to the said first resource allocation module 1101 which will perform the polling after receiving the said resource allocation instruction.

**Fourth Embodiment Example**

Another method for resource allocation is provided in the Fourth Embodiment Example of this Invention that CAP actively allocates resources used for STA sending data, as shown in Figure 12, including the following steps:

Step S1201: CAP polls at least one STA and allocates the first transmission resource to the polled STA;
Step S1202: the said CAP sends the first transmission resource instruction to the said polled STA;
Step S1203: the said STA receives the first transmission resource instruction;
Step S1204: the said STA uses the said first transmission resource to send data.

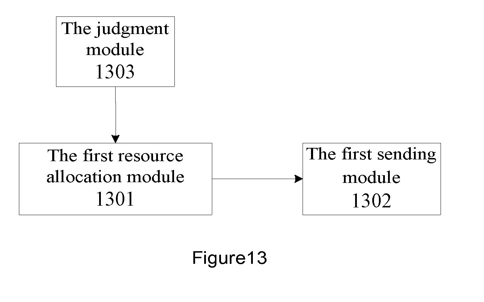

Unlike the resource allocation method in the Third Embodiment Example, CAP directly polls STA and allocates resources used for data transmission, which means STA doesn't need to initiate resource request in order to realize data transmission. To realize the aforesaid polling allocation, a CAP used for realizing resource allocation is provided in the Fourth Embodiment Example of this Invention, as shown in Figure 13, including:

The first resource allocation module 1301, used to poll at least one STA and allocate the first transmission resource for the polled STA;
The first sending module 1302, used to poll the first transmission resource instruction for the polled STA;

The said first transmission resource is used for data transmission by STA. Preferably, the said first sending module 1302 can send the said first transmission resource instruction in the transmission control channel. Preferably, the said first sending module 1302 can send the said first transmission resource instruction via unicasting.

Preferably, the indicted CAP can also include:

The judgment module 1303 is used to judge if there's transmission resource available for allocation now. If there's transmission resource available for allocation, the resource allocation instruction will be sent to the said first resource allocation module 1301 which will perform the polling after receiving thesaid resource allocation instruction.

**Fifth Embodiment Example**

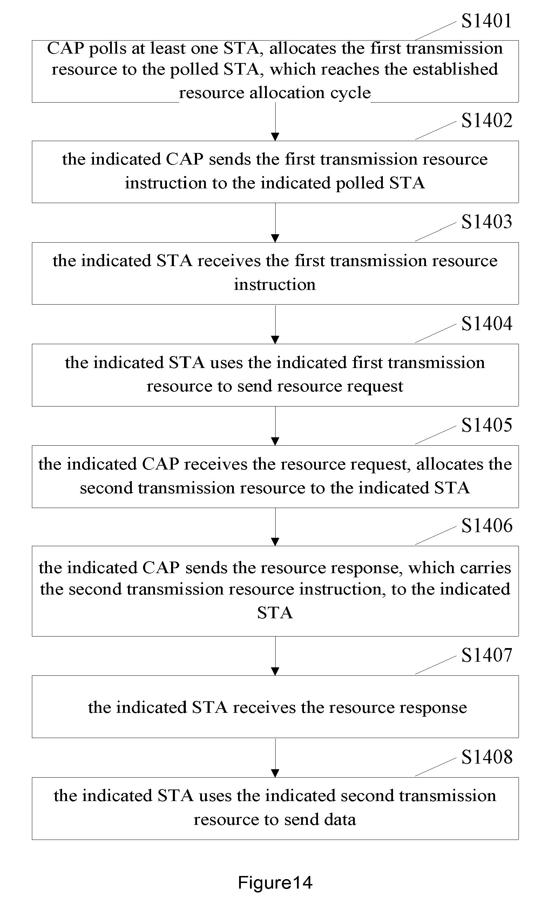

Another method for resource allocation is provided in the Fifth Embodiment Example of this Invention that CAP actively allocates resources used for at lest one STA sending resource request in polling way, as shown in Figure 14, including the following steps:

Step S1401: CAP polls at least one STA, allocates the first transmission resource to the polled STA, which reaches the established resource allocation cycle;
Step S1402: the said CAP sends the first transmission resource instruction to the said polled STA;
Step S 1403: the said STA receives the first transmission resource instruction;
Step S1404: the said STA uses the said first transmission resource to send resource request;
Step S1405: the said CAP receives the resource request, allocates the second transmission resource to the said STA;
Step S 1406: the said CAP sends the resource response, which carries the second transmission resource instruction, to the said STA;
Step S 1407: the said STA receives the resource response;
Step S 1408: the said STA uses the said second transmission resource to send data

Based on the polling allocation solution in the Third Embodiment Example, the monitoring on STA resource allocation cycle is added in the Fourth Embodiment Example, and the SAT which reaches the resource allocation cycle will obtain resource in priority, making the resource allocation more appropriate.

CAP maintains the resource allocation cycle of STA. After assigning the first transmission resource for STA, CAP will recalculate the resource allocation cycle for STA which already obtains the first transmission resource.

In practical, the said CAP can use timer to maintain the resource allocation cycle of STA. In case of time out, STA reaches the established resource allocation cycle, then CAP allocates resource to STA and restart the timer; if not, STA doesn't reach the established resource allocation cycle, and CAP won't allocate resource for STA.

Preferably, the resource allocation cycle of STA is calculated by parameters of its current business type, including priority, time delay budget, package lost budget, and so on. Therefore, it is possible to base on practical business demand to establish the resource allocation cycle and make the resource allocation more reasonable.

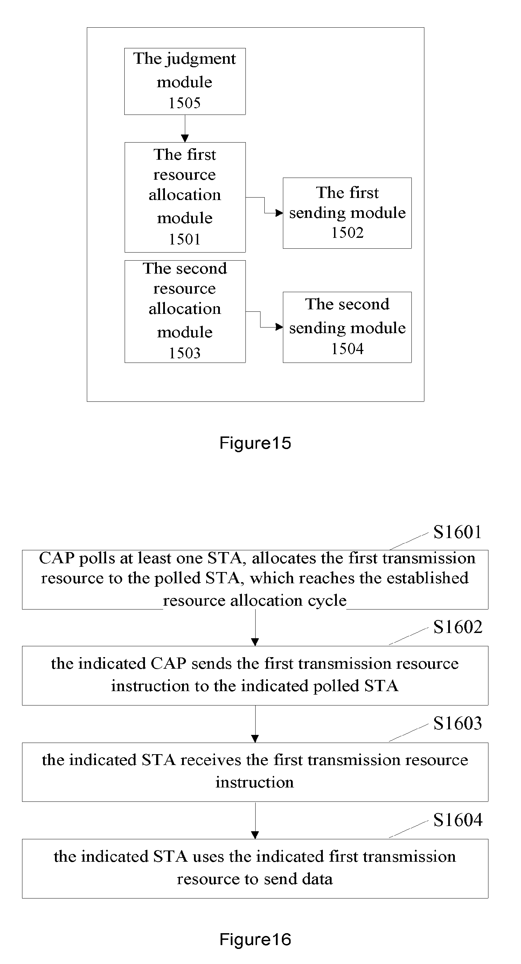

To realize the aforesaid polling allocation, a CAP used for realizing resource allocation is provided in the Fifth Embodiment Example of this Invention, as shown in Figure 15, including:

The first resource allocation module 1501, used topoll at least one STA, allocates the first transmission resource to the polled STA, which reaches the established resource allocation cycle;

The first sending module 1502, used to send the first transmission resource instruction to the said polled STA;

The second resource allocation module 1503, used toreceive the resource request, allocates the second transmission resource to the said STA;

The second sending module 1504, used tosend the resource response, which carries the second transmission resource instruction, to the said STA.

The said first transmission resource is used for resource request transmission by STA.

The said second transmission resource is used for data transmission by STA.

Preferably, the said first resource allocation module 1501 will recalculate the resource allocation cycle for STA which already obtains the first transmission resource.

In practical, the said first resource allocation module 1501 can use timer to maintain the resource allocation cycle of STA. In case of time out, STA reaches the established resource allocation cycle, then the said first resource allocation module 1501 allocates resource to STA and restart the timer; if not, STA doesn't reach the established resource allocation cycle, and the said first resource allocation module 1501 won't allocate resource for STA.

Preferably, the resource allocation cycle of STA is calculated by parameters of its current business type, including priority, time delay budget, package lost budget, and so on. Therefore, it is possible to base on practical business demand to establish the resource allocation cycle and make the resource allocation more reasonable.

Preferably, the said second resource allocation module 1503 supports the resource request based on service flow report. The said resource requests based on service flow report include: identifier of STA, identifiers of single or multiple service flows, and the size of bandwidth resource requested for each service flow. By means of analyzing the said transmission resource request, the said second resource allocation module 1503 can learn each service flow of the said STA and the resource request of each said service flow.

Preferably, the said transmission resource request may also includethe type of the bandwidth resource requested for each service flow. The said second resource allocation module 1503 allows STA to choose the requested bandwidth resource type specific to different service flow, making the resource request more flexible and humanized.

The optional bandwidth resource types include:

Increment bandwidth indicates, when assigning second transmission resource for the service flow, the bandwidth resource size that increases or decreases in current request of the said service flow comparing to the bandwidth resource size already assigned for the said service flow.

Total bandwidth indicates, when assigning second transmission resource for theservice flow, using the bandwidth resource size in current request of the said service flow to replace the bandwidth resource size already assigned for thesaid service flow.

Preferably, the said second resource allocation module 1503 supports the resource request based on STA report. The said resource requests based on STA report include: identifier of STA, which initiates the said transmission resource request, and the total amount of bandwidth resource requested by the said STA. By means of analyzing the said transmission resource request, the said second resource allocation module 1503 can learn the overall resource request by the said STA.

Preferably, the said transmission resource request may also includethe type of the bandwidth resource requested by the said STA. The said second resource allocation module 1503 allows STA to choose the requested bandwidth resource type as needed, making the resource request more flexible and humanized.

The optional bandwidth resource types include:

Increment bandwidth indicates, when assigning second transmission resource for STA, the bandwidth resource size that increases or decreases in current request of the said STA comparing to the bandwidth resource size already assigned for thesaid STA;

Total bandwidth indicates, when assigning second transmission resource for STA, using the bandwidth resource size in current request of the said STA to replace the bandwidth resource size already assigned for the said STA.

Preferably, use the index of the said bandwidth resource from preset resource tables to denote the size of bandwidth resourcerequested.

Preferably, the said preset resource tables include tables of multiple accuracy scopes.

Preferably, the said first sending module 1502 can send the said first transmission resource instruction in the transmission control channel.

Preferably, the said first sending module 1502 can send the said first transmission resource instruction via unicasting.

Preferably, the said second sending module 1504 can send the said transmission resource response in the transmission control channel.

Preferably, the said second sending module 1504 can send the said transmission resource response via unicasting.

Preferably, the said CAP also contains:

The judgment module 1505 is used to judge if there's transmission resource available for allocation now. If there's transmission resource available for allocation, the resource allocation instruction will be sent to the said first resource allocation module 1501 which will perform the polling after receiving the said resource allocation instruction.

**Sixth Embodiment Example**

Another method for resource allocation is provided in the sixth Embodiment Example of this Invention that CAP actively allocates resources used for STA sending data, as shown in Figure 16, including the following steps:

Step S1601: CAP polls at least one STA, allocates the first transmission resource to the polled STA, which reaches the established resource allocation cycle;
Step S1602: the said CAP sends the first transmission resource instruction to the said polled STA;
Step S1603: the said STA receives the first transmission resource instruction;
Step S1604: the said STA uses the said first transmission resource to send data

Unlike the resource allocation method in the Fifth Embodiment Example, CAP directly polls STA and allocates resources used for data transmission, which means STA doesn't need to initiate resource request in order to realize data transmission.

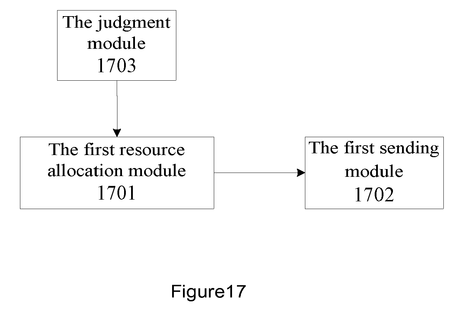

To realize the aforesaid polling allocation, a CAP used for realizing resource allocation is provided in the Sixth Embodiment Example of this Invention, as shown in Figure 17, including:

The first resource allocation module 1701, used to poll at least one STA, allocates the first transmission resource to the polled STA, which reaches the established resource allocation cycle;
The first sending module 1702, used to poll the first transmission resource instruction for the polled STA;
The said first transmission resource is used for data transmission by STA. Preferably, the said first resource allocation module 1701 will recalculate the resource allocation cycle for STA which already obtains the first transmission resource.

In practical, the said first resource allocation module 1701 can use timer to maintain the resource allocation cycle of STA. In case of time out, STA reaches the established resource allocation cycle, then the said first resource allocation module 1701 allocates resource to STA and restart the timer; if not, STA doesn't reach the established resource allocation cycle, and the said first resource allocation module 1701 won't allocate resource for STA.

Preferably, the resource allocation cycle of STA is calculated by parameters of its current business type, including priority, time delay budget, package lost budget, and so on. Therefore, it is possible to base on practical business demand to establish the resource allocation cycle and make the resource allocation more reasonable. Preferably, the said first sending module 1702 can send the said first transmission resource instruction in the transmission control channel.

Preferably, the said first sending module 1702 can send the said first transmission resource instruction via unicasting. Preferably, the indicted CAP can also include:

The judgment module 1703 is used to judge if there's transmission resource available for allocation now. If there's transmission resource available for allocation, the resource allocation instruction will be sent to the said first resource allocation module 1701 which will perform the polling after receiving the said resource allocation instruction.

**Seventh Embodiment Example**

Several methods are given in the First to Sixth Embodiment Example of this Invention to make STA obtain resources used for uplink transmission data, including: competitive resource request method (First Embodiment Example), channel associated resource request method (Second Embodiment Example) and polling allocation method (from the Third to Sixth Embodiment Example). In which:

For both competitive and channel associated resource request methods, STA initiates the request actively. In competitive resource request, STA actively requests the resource in a competitive way, which is applicable for scenarios without uplink transmission resource; in channel associated resource request, STA carries the resource request information in data frame and sends it along with the uplink transmission data, which is applicable for scenarios with uplink data transmission and useful to reduce  resource request exchanges and boost the resource allocation speed of the whole system. In polling allocation method, CAP actively allocates resource for STA and it's unnecessary for STA to initiate request first, which helps Parse resource properly, allocate resource for STA actively when possible, and thus reduce resource request exchanges to speed up the resource allocation of the whole system. Therefore, a better result can be achieved by combing these three methods in accordance with specific scenario. A combing method is provided in the Seventh Embodiment Example of this Invention:

With resources available, CAP allocates resource for STA actively, and consequently STA uses the said uplink transmission resource to send resource request or data directly; if CAP doesn't allocate resource for STA, in the absence of uplink transmission resource STA suits to initiate resource request in a competitive way; with uplink transmission resource STA suits to adopt the channel associated method, namely, carry the resource request in data frame and send it out.

Preferably, in the Seventh Embodiment Example of this Invention CAP is designed to allocate resource used for uplink data transmission to STA, which bases on STAID. That is to say, according to the resource requested by STA (based on FID or STA request), CAP calculates total resources to allocate for STA which will allocate resources among service flows then. Namely, after acquiring the assigned total resources, STA will fulfill the second allocation among service flows via internal scheduling, which means STA first allocates the transmission resources among multiple service flows and then controls the said multiple service flows to transmit data to the corresponding transmission resources. The said method to allocate resource among service flows can be established as needed, such as by priority or equalization, and there's no hard limit in this Invention. By using the aforesaid second allocation method, operations on CAP side can be simplified as STA shares part of the resource allocation work. This helps to speed up the overall resource allocation for multiple STA system; meanwhile, STA can design the resource allocation strategy according to demands like set business priority, making the resource allocation more flexible, able to meet different client needs and providing better user experience.

Preferably, after acquiring the assigned resource, the said STA will judge if the assigned resource meets the requirement. If so, STA uses the said transmission resource to send data which needs to be sent; if not, STA uses the said transmission resource to send part of the data which needs to be sent and performs the resource request again in accordance with the bandwidth resource currently needed. When reperforming the resource request, due to uplink data transmission, the better way is to use channel associated resource request method to realize resource request.

Compare the assigned resource with the requested resource to see if the requirement is met. If the said assigned resource is smaller than the requested resource, the requirement is not met; otherwise, the requirement is met.

Preferably, during the preset period after sending the request, if the said STA doesn't receive the corresponding response, this request is regarded as a failure, and the resource request will be performed again. Preferably, the timing is achieved by  accounting frames in the Seventh Embodiment Example of this Invention, which guarantees more accurate timing and instant treatment:

When using the competitive resource request method to demand resource, CAP will return the response (ACK) message after receiving the second transmission resource request to inform of STA that the said second transmission resource request is received. After sending the first transmission resource request, if STA doesn't receive the first transmission resource response beyond the preset first waiting interval at maximum, the current resource request is regarded as failed, and the resource request needs to be initiated again; or after sending the second transmission resource request, if STA doesn't receive the second transmission resource response beyond the preset second waiting interval at maximum, the current resource request is regarded as failed, and the resource request needs to be initiated again.

When using channel associated resource request method to demand resource, after sending the data frame which carries the resource request information, if no corresponding response is received beyond the preset third waiting interval at maximum, the current request is regarded as failed and the resource request will be initiated again.

The specific method for re-performing resource request can be decided upon practical scenario. If no uplink transmission resource exists currently, STA can initiate competitive resource request; if uplink transmission resource exists currently, STA can use channel associated method to carry the resource request in data frame and send it out.

The above description includes the examples of one or more embodiments. However, it is impossible to exhaust all potential combinations of the components and methods in describing the above embodiments, but it should be understood by one skilled in the art that components and methods of each embodiment may be further combined and arranged. Therefore, the embodiments described herein intend to contemplate all such changes, modifications and variations that fall into the scope of the appended claims. In addition, the term "comprise" used in the specification or the claims is similar to the term "include", just like the interpretation of the term "include" in the claims as a connection word. Additionally, any term "or" used in the claims or the specification intends to represent a "nonexclusive or".

## Claims

1. A resource request method , is **characterized in that** , comprising:

   Carrying transmission resource request in data frame;
   Sending the data frame carrying the transmission resource request.

2. The method of claim 1, wherein, further comprising:

   Receiving transmission resource request response, said transmission resource request response carries transmission resource instruction;
   Sending data by utilizing transmission resource.

3. The method of claim 2, wherein,
   After receiving the transmission resource response, before using said transmission resource to transmit data, allocate resources among each service flow in accordance with said transmission resource instruction.

4. The method of claim 1, wherein,
   Carry the said transmission resource request in frame body of said data frame.

5. The method of claim 4, wherein, further comprising:

   Setting piggback Request indication in the frame header of said data frame,
   Piggback request indication to indicate presence of said transmission resource request.

6. The method of claim 1, wherein,
   Encapsulating identifiers of one or more service flows, and size of bandwidth resource requested for each service flow in said transmission resource request

7. The method of claim 6, wherein,
   Indicating size of bandwidth resource with index preset in resource table in said transmission resource request

8. The method of claim 7, wherein,
   Carrying type of resource table in said resource request, resource tables with different type is corresponding to different accuracy scopes.

9. The method of claim 1, wherein,
   After sending data frame carrying said transmission resource request, if no corresponding response is received after the predefined maximum wait frame interval, the current resource request is considered as a failure and the resource request needs to be initiated, again.

10. A method for resource request, is **characterized in that** comprising
    Receive data frame which carries transmission resource request;
    Parse said transmission resource request from said data frame;
    Allocate transmission resource for corresponding STA in accordance with said transmission resource request;
    Send the transmission resource response to the said corresponding STA, said transmission resource request carries the transmission resource indication.

11. The method of claim 10, wherein,
    Parse body of said data frame to acquire said transmission resource request.

12. The method of claim 11, further comprising:

    Parse header of the data frame, acquire said piggback request indication, so as to judge presence of said transmission resource request.

13. The method of claim 10, wherein,
    The said transmission resource request includes identifiers of one or more service flows, and size of bandwidth resource requested for each service flow in said transmission resource request;
    Allocate bandwidth resource for the said one or more service flows in accordance with the transmission resource request.

14. The method of claim 13, wherein,
    Indicate said size of bandwidth resource with index of the said size of bandwidth resource preset in resource table;
    learn the size of bandwidth resource requested for each service flow through looking up the preset resource table.

15. The method of claim 14, wherein,
    Carry type of the resource table in said transmission resource request;
    Before looking up resource table based on the index, locate at the resource table corresponding to accuracy scope.

16. A station STA used for resource request , is **characterized in that** , comprising:

    Encapsulation module, used for carrying transmission resource request in data frame;
    First sending module, used for sending data frame carried in transmission resource request.

17. The STA of claim 16, further comprising:

    Receiving module, used for receiving transmission resource response, said transmission resource response carries the transmission resource instruction;
    The second sending module, used for sending data in corresponding transmission resource in accordance with transmission resource instruction.

18. The STA of claim 17, further comprising:

    Receiving module, used for receiving transmission resource response which carries the transmission resource instruction;
    Resource allocation module, connected with said receiving module, used for allocating resources for each service flow in accordance with said transmission resource instruction;
    The second sending module, comected with said resource allocation module, used for sending data in corresponding transmission resource in accordance with the resource allocation result.

19. The STA of claim 16, wherein,
    The said encapsulation module encapsulates piggback request indication in data frame to denote presence of said transmission resource request.

**20.** The STA of claim 19, wherein,
The said encapsulation module carries said piggback request indication into header of the said data frame.

**21.** The STA of claim 20, wherein,
The said encapsulation module, for setting a field in header of said data frame to denote presence of the said transmission resource request by value of said field

**22.** The STA of claim 16, wherein,
The said encapsulation module, for carries said transmission resource request into body of said data frame.

**23.** The STA of claim 22, wherein,
Said encapsulation module, setting a field in body of the data frame, for carrying said transmission resource request.

**24.** The STA of claim 16, wherein,
The said encapsulation module, used for encapsulating identifiers of single or multiple service flow into said transmission resource request, and size of bandwidth resource requested for each service flow.

**25.** The STA of claim 24, wherein,
Said encapsulation module, also used for denoting size of bandwidth resource with index preset in resource table.

**26.** The STA of claim 25, wherein,
The said encapsulation module, also used for carrying type of resource table in said resource request, resource tables with different type is corresponding to different accuracy scopes.

**27.** The STA of claim 17, further comprising:

Repeat module, after said first sending module send said data frame carrying said transmission resource request, start timing, if no corresponding response is received beyond predefined maximum wait frame interval, the current resource request is considered as a failure; when there is data frame need to be transmitted, trigger said encapsulation module to carry said transmission resource request in said data frame, and initiate resource request again.

**28.** A central access point CAP used for resource request is **characterized in that**, comprising:

Receiving module, used for receiving data frame which carries transmission resource request;
Analysis module, used for parsing said transmission resource request from said data frame;
Resource allocation module, used for allocating transmission resource for corresponding STA in accordance with said transmission resource request;
Sending module, used for sending transmission resource response to said corresponding STA, said transmission resource response carries the transmission resource instruction.

**29.** The CAP of claim 28, further comprising:

The said analysis module, used parsing the piggback request indication in data frame to learn presence of transmission resource request.

**30.** The CAP of claim 29, wherein,
The said analysis module, used to parse the field for piggback request indication in header of the data frame to acquire said piggback request indication.

**31.** The CAP of claim 28, wherein,
The said analysis module, used for parsing body of data frame to acquire the said transmission resource request.

**32.** The CAP of claim 31, wherein,
The said analysis module, used for parsing field for piggback request indication in body of the data frame to acquire said transmission resource request.

**33.** The CAP of claim 28, wherein,

Said transmission resource request includes identifiers of single or multiple service flows and size of bandwidth resource requested for each service flow;

Said resource allocation module allocates bandwidth resource for thesaid single or multiple service flows in accordance with transmission resource request.

34. The CAP of claim 33, wherein,

The size of said bandwidth resource is denoted with the index of said bandwidth resource from the preset resource table;

Said resource allocation module, for learning size of bandwidth resource requested for each service flow through looking up the preset resource table.

35. The CAP of claim 34, wherein,

The said transmission resource request carries the resource table;

Before searching table resource as per the index, the said resource allocation module bases on the resource table type to locate the resource table with the corresponding accuracy scope first.

Carrying type of the resource table in said transmission resource request,

Said resource allocation module, before looking up resource table based on the index, for locating at the resource table corresponding to accuracy scope.

36. The CAP of claim 28, wherein,

Said sending module, used for sending said transmission resource response to corresponding STA in transmission control channel.

37. The CAP of claim 28, wherein,

Said sending module, used for sending said transmission resource response to corresponding STA via unicasting.

S101

STA sends the first transmission resource request

S102

CAP receives the indicated first transmission resource request and assigns the first transmission resource to the indicated STA

S103

the indicated CAP sends the first transmission resource response, which carries the first transmission resource instruction, to the indicated STA

S104

the indicated STA receives the first transmission resource response

S105

the indicated STA sends the second transmission resource request by using the first transmission resource

S106

the indicated CAP receives the second transmission resource request and assigns the second transmission resource to the indicated STA

S107

the indicated CAP sends the second transmission resource response, which carries the second transmission resource instruction, to the indicated STA

S108

the indicated STA receives the second transmission resource response

S109

the indicated STA transmits data by using the indicated second transmission resource

Figure1

CAP_MAC & i

$\{\delta_{CS}\}\ j$

```
Generation      Constellation    Subcarrier     Cyclic
of PN       →   mapping      →   mapping    →   shift in    →  IFFT   →  Add CP  →
sequence                                        frequency
                                                domain
```

Figure2

R

| 0 | 0 | 1 | 0 | 1 | 0 | 1 | 1 | $r_6$ | $r_5$ | $r_4$ | $r_3$ | $r_2$ | $r_1$ | $r_0$ |

MSB                                                                      LSB

Figure3

Bits▯  16      12         4           16                                        32

| Frame Control | STAID | The number of FIDs | FID-1 | FID-2 | ... | FID-n | FCS |

| FID | Reserveed | Resource Index | reserved |

Bits▯  4      4        7         1

Figure4

The first sending module 501 → The first receiving module 502

The second sending module 503 → The second receiving module 504

The third sending module 505

Figure5

The first receiving module 601 → The first sending module 602

The second receiving module 603 → The second sending module 604

S

Figure6

S701

STA carries the transmission resource request in data frame

S702

the indicated STA sends the indicated data frame carrying the transmission resource request

S703

CAP receives the indicated data frame carrying the transmission resource request

S704

the indicated CAP analyses the indicated transmission resource request from the indicated data frame

S705

according to the indicated transmission resource request, the indicated CAP assigns transmission resource for the indicated STA

S706

the indicated CAP sends the transmission resource response, which carries the transmission resource instruction, to the indicated STA

S707

the indicated STA receives the indicated transmission resource response

S708

the indicated STA sends data by using the indicated transmission resource

Figure7

Figure8

Figure9

S1001

CAP polls at least one STA and allocates the first
transmission resource to each polled STA

S1002

the indicated CAP sends the first transmission resource
instruction to the indicated polled STA

S1003

the indicated STA receives the first transmission resource
instruction

S1004

the indicated STA uses the indicated first transmission
resource to send transmission resource request

S1005

the indicated CAP receives the indicated transmission
resource request and allocates the second transmission
resource for the corresponding STA

S1006

the indicated CAP sends the transmission resource response,
which carries the second transmission resource instruction, to
the indicated corresponding STA

S1007

the indicated STA receives the indicated transmission
resource response

S1008

the indicated STA uses the indicated second transmission
resource to send data

Figure10

The judgment module 1105

The first resource allocation module 1101

The first sending module 1102

The second resource allocation module 1103

The second sending module 1104

Figure11

S1201

CAP polls at least one STA and allocates the first transmission resource to the polled STA

S1202

the indicated CAP sends the first transmission resource instruction to the indicated polled STA

S1203

the indicated STA receives the first transmission resource instruction

S1204

the indicated STA uses the indicated first transmission resource to send data

Figure12

The judgment
module
1303

The first resource
allocation module
1301

The first sending
module
1302

Figure13

S1401

CAP polls at least one STA, allocates the first transmission resource to the polled STA, which reaches the established resource allocation cycle

S1402

the indicated CAP sends the first transmission resource instruction to the indicated polled STA

S1403

the indicated STA receives the first transmission resource instruction

S1404

the indicated STA uses the indicated first transmission resource to send resource request

S1405

the indicated CAP receives the resource request, allocates the second transmission resource to the indicated STA

S1406

the indicated CAP sends the resource response, which carries the second transmission resource instruction, to the indicated STA

S1407

the indicated STA receives the resource response

S1408

the indicated STA uses the indicated second transmission resource to send data

Figure14

```
┌─────────────────────────────────────────────────────────────┐
│         ┌──────────────────┐                                 │
│         │  The judgment     │                                 │
│         │    module         │                                 │
│         │     1505          │                                 │
│         └────────┬─────────┘                                 │
│                  │                                            │
│                  ▼                                            │
│         ┌──────────────────┐                                 │
│         │  The first        │                                 │
│         │  resource         │      ┌──────────────────┐      │
│         │  allocation       │      │   The first       │      │
│         │  module       ────┼─────▶│ sending module    │      │
│         │     1501          │      │     1502          │      │
│         └──────────────────┘      └──────────────────┘      │
│         ┌──────────────────┐                                 │
│         │  The second       │                                 │
│         │  resource         │      ┌──────────────────┐      │
│         │  allocation   ────┼─────▶│  The second       │      │
│         │  module           │      │ sending module    │      │
│         │     1503          │      │     1504          │      │
│         └──────────────────┘      └──────────────────┘      │
└─────────────────────────────────────────────────────────────┘
```

Figure15

S1601

CAP polls at least one STA, allocates the first transmission resource to the polled STA, which reaches the established resource allocation cycle

S1602

the indicated CAP sends the first transmission resource instruction to the indicated polled STA

S1603

the indicated STA receives the first transmission resource instruction

S1604

the indicated STA uses the indicated first transmission resource to send data

Figure16

The judgment module 1703

The first resource allocation module 1701

The first sending module 1702

Figure17

# INTERNATIONAL SEARCH REPORT

| International application No. |
| --- |
| PCT/CN2012/072904 |

## A. CLASSIFICATION OF SUBJECT MATTER

H04W 72/04 (2009.01) i

According to International Patent Classification (IPC) or to both national classification and IPC

## B. FIELDS SEARCHED

Minimum documentation searched (classification system followed by classification symbols)

IPC: H04Q; H04W

Documentation searched other than minimum documentation to the extent that such documents are included in the fields searched

Electronic data base consulted during the international search (name of data base and, where practicable, search terms used)

CPRSABS;CNKI;VEN: resource, request, schedule, frame, data, response, acknowledgement, STA, CAP, identifier, ID, table, index, time, timeout, failure, service flow

## C. DOCUMENTS CONSIDERED TO BE RELEVANT

| Category* | Citation of document, with indication, where appropriate, of the relevant passages | Relevant to claim No. |
| --- | --- | --- |
| X | CN1801800A (SIEMENS LTD CHINA) 12 Jul. 2006(12.07.2006) description, page 5, lines 3-13 and figure 2 | 1-37 |
| A | CN101175039A (HUAWEI TECH CO LTD) 07 May 2008(07.05.2008) description, page 8, line 2 – page 9, line 12 and figure 2 | 1-37 |
| A | CN101296212A (HUAWEI TECH CO LTD) 29 Oct. 2008(29.10.2008) description, page 7, line 9 – page 8, line 10 and figure 2 | 1-37 |

☐ Further documents are listed in the continuation of Box C.   ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 18 Jun. 2012(18.06.2012) | 28 Jun. 2012(28.06.2012) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019451 | Authorized officer<br><br>Cheng, Xiaoliang<br><br>Telephone No. (86-10)62411345 |

Form PCT/ISA /210 (second sheet) (July 2009)

# INTERNATIONAL SEARCH REPORT
## Information on patent family members

| International application No. |
| --- |
| PCT/CN2012/072904 |

| Patent Documents referred in the Report | Publication Date | Patent Family | Publication Date |
| --- | --- | --- | --- |
| CN1801800A | 12.07.2006 | NONE | |
| CN101175039A | 07.05.2008 | CN101175039B | 09.02.2011 |
| CN101296212A | 29.10.2008 | US2011194528A1 | 11.08.2011 |
| | | US2012020324A1 | 26.01.2012 |
| | | US8179881B2 | 15.05.2012 |
| | | US8064397B2 | 22.11.2011 |
| | | WO2008131668A1 | 06.11.2008 |
| | | EP2157719A1 | 24.02.2010 |
| | | US2010046465A1 | 25.02.2010 |
| | | EP2157719B1 | 23.05.2012 |

Form PCT/ISA /210 (patent family annex) (July 2009)

**EP 2 693 818 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110081288
- CN 201110130194
- CN 201110188594X
- CN 201210027898
- CN 201210041628